(19) Europäisches Patentamt
European Patent Office
Office européen des brevets

(11) **EP 4 685 871 A1**

(12) **EUROPEAN PATENT APPLICATION**
published in accordance with Art. 153(4) EPC

(43) Date of publication:
**28.01.2026  Bulletin 2026/05**

(21) Application number: **24895504.9**

(22) Date of filing: **30.05.2024**

(51) International Patent Classification (IPC):
**H01M 4/36** (2006.01)

(52) Cooperative Patent Classification (CPC):
**C01B 25/45; H01M 4/04; H01M 4/136; H01M 4/36; H01M 4/58; H01M 4/62; H01M 10/052;** Y02E 60/10

(86) International application number:
**PCT/CN2024/096471**

(87) International publication number:
**WO 2025/112395 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023  CN 202311638192**

(71) Applicants:
• **Jiangsu Contemporary Amperex Technology Limited**
**Changzhou, Jiangsu 213300 (CN)**
• **Jiangsu Lithitech Co., Ltd.**
**Changzhou, Jiangsu 213300 (CN)**

(72) Inventors:
• **LI, Jiawei**
**Changzhou, Jiangsu 213300 (CN)**
• **WANG, Caijun**
**Changzhou, Jiangsu 213300 (CN)**
• **LI, Houyong**
**Changzhou, Jiangsu 213300 (CN)**
• **ZHU, Yinjun**
**Changzhou, Jiangsu 213300 (CN)**
• **WANG, Jun**
**Changzhou, Jiangsu 213300 (CN)**
• **GUO, Yongnan**
**Changzhou, Jiangsu 213300 (CN)**
• **LV, Jiale**
**Changzhou, Jiangsu 213300 (CN)**

(74) Representative: **Lorenz Seidler Gossel Part. mbB**
**Widenmayerstr. 23**
**80538 München (DE)**

(54) **PREPARATION METHOD FOR POSITIVE ELECTRODE MATERIAL, POSITIVE ELECTRODE MATERIAL, POSITIVE ELECTRODE SHEET, BATTERY, AND ELECTRIC DEVICE**

(57)    A method for preparing a positive electrode material, a positive electrode material, a positive electrode plate, a battery, and an electric apparatus are disclosed. The method includes: mixing a precursor material, a lithium source, and an optional phosphorus source, and sintering to obtain a pre-product, where the precursor material includes a compound $Mn_xFe_yM_{(1-x-y)}HPO_4 \cdot nH_2O$, $0.9 \leq x+y < 1$, $0 < x \leq 0.9$, $0 < y \leq 0.9$, $0 \leq n \leq 6$, and M includes one or more of transition metal elements other than manganese and iron, Group IIA metal elements, Group IIIA metal elements, and Group IVA metal elements; and mixing the pre-product, a carbon source, and a solvent, drying, and sintering to obtain a positive electrode material. The positive electrode material of this application exhibits uniform element distribution, good material stability, high compacted density, low powder resistivity, and good electronic conductivity, thereby improving the specific capacity and cycling performance of a battery.

SU3800 15.0kV 10.2mm x5.00k SE          10.0μm

FIG. 8

EP 4 685 871 A1

**Description**

**CROSS-REFERENCE TO RELATED APPLICATIONS**

This application claims priority to Chinese Patent Application No. 202311638192.4, filed on December 1, 2023 and entitled "METHOD FOR PREPARING POSITIVE ELECTRODE MATERIAL, POSITIVE ELECTRODE MATERIAL, POSITIVE ELECTRODE PLATE, BATTERY, AND ELECTRIC APPARATUS", the entire content of which is incorporated herein by reference.

**TECHNICAL FIELD**

This application relates to the field of lithium battery technology, and in particular, to a method for preparing a positive electrode material, a positive electrode material, a positive electrode plate, a battery, and an electric apparatus.

**BACKGROUND**

In recent years, with the increasingly wide application range of secondary batteries, secondary batteries have been extensively used in energy storage power systems such as hydroelectric, thermal, wind, and solar power stations, as well as in electric tools, electric bicycles, electric motorcycles, electric vehicles, military equipment, aerospace, and other fields. Due to the significant development of secondary batteries, higher requirements have been imposed on their energy density, cycling performance, and safety performance.

**SUMMARY**

This application is made in view of the above issues, with an objective of providing a method for preparing a positive electrode material, a positive electrode material, a positive electrode plate, a battery, and an electric apparatus. The positive electrode material of this application exhibits uniform element distribution, good material stability, high compacted density, low powder resistivity, and good electronic conductivity, thereby improving the specific capacity and cycling performance of the battery.

To achieve the above objective, a first aspect of this application provides a method for preparing a positive electrode material, including the following steps:

mixing a precursor material, a lithium source, and an optional phosphorus source, and sintering to obtain a pre-product, where the precursor material includes a compound $Mn_xFe_yM_{(1-x-y)}HPO_4 \cdot nH_2O$, $0.9 \leq x+y < 1$, $0 < x \leq 0.9$, $0 < y \leq 0.9$, $0 \leq n \leq 6$, and M includes one or more of transition metal elements other than manganese and iron, Group IIA metal elements, Group IIIA metal elements, and Group IVA metal elements; and
mixing the pre-product, a carbon source, and a solvent, drying, and sintering to obtain a positive electrode material.

Thus, the precursor material used in this application has uniform distribution of manganese, iron, phosphorus, and doping elements, exhibits stable composition, and is not prone to element segregation. Using this precursor material as the raw material can improve the element distribution uniformity and material stability of the positive electrode material, thereby improving the specific capacity and cycling performance of a battery. Additionally, in the steps of preparing the pre-product, through sintering, volatile substances are evaporated, resulting in a dense pre-product. Subsequently, a coating layer is prepared on the pre-product, which is conducive to increasing the density of the coating layer, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large, thereby improving the processability of the material.

In any embodiment, the positive electrode material includes a core and a coating layer coating the core, where the core includes a compound $LiMn_xFe_yM_{(1-x-y)}PO_4$, $0.9 \leq x+y < 1$, $0 < x \leq 0.9$, $0 < y \leq 0.9$, and M includes one or more of transition metal elements other than manganese and iron, Group IIA metal elements, Group IIIA metal elements, and Group IVA metal elements; and the coating layer includes carbon.

In any embodiment, $0.992 \leq x+y < 0.995$; and/or

$$0.513 \leq x \leq 0.658;$$

and/or

$$0.336 \leq y \leq 0.479;$$

and/or

$$0 \leq n \leq 1; \text{ a}$$

and/or M includes one or more elements of titanium, magnesium, aluminum, vanadium, zinc, cobalt, nickel, tin, niobium, tungsten, zirconium, tantalum, cerium, and europium.

In any embodiment, a particle size $D_v50$ of the precursor material is 3-100 $\mu$m, optionally 5-50 $\mu$m, and more optionally 8-20 $\mu$m; and/or

a compacted density of the precursor material at 30 MPa is 1.35-2.5 g/cm$^3$, optionally 1.5-2.5 g/cm$^3$; and/or
a mass percentage of the compound $Mn_xFe_yM_{(1-x-y)}HPO_4 \cdot nH_2O$ in the precursor material is 98%-100%; and/or
the precursor material includes primary crystalline particles with polyhedral morphology.

The particle size $D_v50$ of the precursor material of this application being within the above range facilitates the washing and filtration operations during the preparation of the precursor, improving the yield of the precursor material. Additionally, during the preparation of the positive electrode material, the suspension of precursor particles is facilitated, making the precursor particles less likely to settle, thereby improving the efficiency of the mixing and grinding processes.

The compacted density of the precursor material of this application being within the above range is conducive to increasing the compacted density of the positive electrode material, thereby increasing the specific capacity of the battery.

The high compound content and low impurity content in the precursor material of this application result in a positive electrode material with low impurity content, improving the specific capacity and cycling performance of the battery.

The precursor material of this application includes primary crystalline particles with polyhedral morphology, where the primary crystalline particles have flat and regular crystal planes and smaller inter-particle gaps. This is conducive to increasing the compacted density of the precursor material.

In any embodiment, the precursor material is prepared by the following steps:

dissolving a soluble manganese source, a soluble iron source, and a soluble source of element M in a solvent to obtain a solution;
slowly adding the solution to a phosphoric acid solution for reaction, followed by optional aging, to obtain a reaction product; and
filtering the reaction product and drying the resulting filter residue to obtain the precursor material.

Thus, in this application, the soluble manganese source, the soluble iron source, and the soluble source of element M are first prepared into a stable and uniform solution, then the solution is slowly added to the phosphoric acid solution to control and reduce side reactions, followed by optional aging and drying of the resulting filter residue, resulting in a precursor material with uniform composition, good batch consistency, and low impurity content. The positive electrode material prepared using this precursor material exhibits uniform element distribution and good batch consistency, thereby improving the specific capacity and cycling performance of the battery.

In any embodiment, in the steps of preparing the precursor material,

the soluble manganese source includes one or more of a soluble organic manganese source and a soluble inorganic manganese source, optionally a soluble organic manganese source, more optionally one or more of soluble organic acid salts of manganese, and further optionally one or more of manganous acetate, manganous formate, manganous citrate, and manganous 2-hydroxypropionate; and/or
the soluble iron source includes one or more of a soluble organic iron source and a soluble inorganic iron source, optionally a soluble organic iron source, more optionally one or more of soluble organic acid salts of iron, and further optionally one or more of ferrous acetate, ferrous formate, ferrous citrate, and ferrous 2-hydroxypropionate; and/or
the soluble source of element M includes one or more of an inorganic source of element M and an organic source of element M, optionally one or more of soluble organic acid salts and soluble inorganic acid salts of element M, and more optionally one or more of sulfates, nitrates, chlorides, formates, acetates, citrates, and 2-hydroxypropionates of element M.

Using the soluble organic manganese source and/or the soluble organic iron source is conducive to reducing the impurity content in the precursor material and improving batch consistency, thereby improving the specific capacity and cycling performance of the battery.

In any embodiment, in the steps of preparing the precursor material,

the solution is slowly added to the phosphoric acid solution for reaction at 25°C-95°C, and optionally, the solution is slowly added to the phosphoric acid solution for reaction at 30°C-90°C; and/or
an addition time of the solution is 10-300 min, optionally 15-300 min, and more optionally 60-180 min; and/or
a molar ratio of a phosphoric acid in the phosphoric acid solution to the total metal elements in the solution is 0.4-1.5, optionally 0.5-1.5, and more optionally 0.8-1.2; and/or
a total concentration of the metal elements in the solution is 0.1-3.0 mol/L, optionally 0.5-2.5 mol/L, and more optionally 1.0-1.6 mol/L; and/or
a concentration of the phosphoric acid in the phosphoric acid solution is 0.1-3.0 mol/L, optionally 0.5-2.5 mol/L, and more optionally 1.0-1.32 mol/L; and/or
a molar amount of element M in the solution accounts for 0.1%-10% of a total molar amount of the metal elements; and/or
a molar amount of the Mn element in the solution accounts for 30%-85% of the total molar amount of the metal elements.

In this application, controlling the ambient temperature at which the mixed metal solution is added to the phosphoric acid solution can reduce side reactions, resulting in a precursor material with uniform composition, good batch consistency, and low impurity content, thereby improving the specific capacity and cycling performance of the battery.

In this application, controlling the speed of adding the solution to the phosphoric acid solution is conducive to controlling and reducing side reactions, resulting in a precursor material with uniform composition, good batch consistency, and low impurity content, thereby improving the electrical performance of the battery.

In this application, controlling the molar ratio of the phosphoric acid to the total metal elements can increase the specific capacity of the battery.

In this application, controlling the concentration of each metal element in the solution can adjust the molar ratio of each metal element in the precursor product.

In any embodiment, in the steps of preparing the precursor material,

an aging temperature is 40°C-98°C, optionally 60°C-95°C; and/or
an aging time is 10-500 min, optionally 30-300 min; and/or
the reaction and/or aging is performed under a condition with a pH value of 1.5-4.5; and/or
the reaction and/or aging is performed under a stirring condition.

Aging facilitates the growth of precipitate crystals, reducing a proportion of amorphous particles in the precursor material, thereby obtaining a precursor material with good crystallinity and high compacted density, thus improving the specific capacity and cycling performance of the battery.

In any embodiment, in the steps of preparing the precursor material,

the dissolution is performed at 25°C-80°C, optionally at 25°C-40°C; and/or
the solvent is water; and/or
the filtration is vacuum filtration, pressure filtration, or centrifugal filtration; and/or before the drying, the filter residue is washed, and optionally, the filter residue is washed with water; and/or
a drying temperature is 80°C-500°C, optionally 120°C-400°C, and more optionally 150°C-300°C; and/or
a drying time is 10-300 min.

In any embodiment, in the steps of preparing the pre-product,

a molar ratio of the precursor material to the lithium element in the lithium source is 0.9:1-1.1:1; and/or
a molar ratio of the phosphorus element in the phosphorus source to the lithium element in the lithium source is 1:1-1.05:1; and/or
a mixing time is 0.5-4 h; and/or
a sintering temperature is 350°C-900°C, optionally 450°C-800°C; and/or
a sintering time is 3-10 h.

The mixing operation is conducive to increasing the surface energy of particles, enhancing solid-solid reaction activity, shortening a diffusion path of lithium into the crystal interior of the precursor material, and making the reaction to form the pre-product more complete, thereby improving the electrical performance of the battery.

The sintering temperature and sintering time used facilitate the evaporation of volatile substances, resulting in a dense pre-product.

In any embodiment, in the steps of preparing the positive electrode material,

> a weight ratio of the pre-product to the carbon source is 3:1-30:1, optionally 5:1-15:1; and/or
> a ratio of a weight of the solvent to a total weight of the carbon source and the pre-product is 1:1-10:1; and/or
> a mixing time is 2-8 h; and/or
> the drying is performed by spray drying; and/or
> an inlet temperature of the spray drying is 100°C-280°C; and/or
> an outlet temperature of the spray drying is 50°C-180°C; and/or
> a sintering temperature is 500°C-900°C, optionally 600°C-800°C; and/or
> a sintering time is 8-20 h.

The sintering temperature and sintering time used facilitate complete reaction, preparing a coating layer with good density on the pre-product, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large.

In any embodiment, the lithium source includes one or more of organic acid salts, inorganic acid salts, oxides, and hydroxides of lithium, optionally one or more of lithium carbonate, lithium hydroxide, lithium acetate, and lithium oxide; and/or

> the phosphorus source includes one or more of phosphates, hydrogen phosphates, and dihydrogen phosphates, optionally one or more of lithium phosphate, lithium dihydrogen phosphate, dilithium hydrogen phosphate, manganese hydrogen phosphate, ammonium dihydrogen phosphate, diammonium hydrogen phosphate, and manganese iron hydrogen phosphate; and/or
> the carbon source includes one or more of an organic carbon source and an inorganic carbon source, optionally one or more of methanol, ethanol, acetic acid, polyethylene glycol, polyvinyl alcohol, polyvinyl butyral, glucose, maltose, and polytetrafluoroethylene; and/or
> the solvent includes one or more of water, ethanol, and acetone.

A second aspect of this application provides a positive electrode material including a core and a coating layer coating the core, where the core includes a compound $LiMn_xFe_yM_{(1-x-y)}PO_4$, $0.9 \leq x+y<1$, $0<x\leq0.9$, $0<y\leq0.9$, and M includes one or more of transition metal elements other than manganese and iron, Group IIA metal elements, Group IIIA metal elements, and Group IVA metal elements, optionally one or more elements of titanium, magnesium, aluminum, vanadium, zinc, cobalt, nickel, tin, niobium, tungsten, zirconium, tantalum, cerium, and europium; and the coating layer includes carbon.

Thus, the precursor material used in this application has uniform distribution of manganese, iron, phosphorus, and doping elements, exhibits stable composition, and is not prone to element segregation. Using this precursor material as the raw material can improve the element distribution uniformity and material stability of the positive electrode material, thereby improving the specific capacity and cycling performance of a battery. Additionally, in the steps of preparing the pre-product, through sintering, volatile substances are evaporated, resulting in a dense pre-product. Subsequently, a coating layer is prepared on the pre-product, which is conducive to increasing the density of the coating layer, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large, thereby improving the processability of the material.

In any embodiment, a compacted density of the positive electrode material at 30 MPa is 1.88-2.52 g/cm$^3$, optionally 2.0-2.5 g/cm$^3$; and/or

> a BET specific surface area of the positive electrode material at a liquid nitrogen temperature is 9.87-22.34 m$^2$/g, optionally 12-18 m$^2$/g; and/or
> a powder resistivity of the positive electrode material is 1-1893 $\Omega$·cm, optionally 12-1000 $\Omega$·cm; and/or
> the positive electrode material is prepared by the method described in the first aspect of this application.

A third aspect of this application provides a positive electrode plate including a positive electrode material prepared by the method described in the first aspect of this application or the positive electrode material described in the second aspect of this application.

A fourth aspect of this application provides a battery including the positive electrode plate described in the third aspect of this application.

A fifth aspect of this application provides an electric apparatus including the battery described in the fourth aspect of this application.

**BRIEF DESCRIPTION OF DRAWINGS**

FIG. 1 is a schematic diagram of a battery cell according to an embodiment of this application.

FIG. 2 is an exploded view of the battery cell according to the embodiment of this application shown in FIG. 1.

FIG. 3 is a schematic diagram of a battery module according to an embodiment of this application.

FIG. 4 is a schematic diagram of a battery pack according to an embodiment of this application.

FIG. 5 is an exploded view of the battery pack according to the embodiment of this application shown in FIG. 4.

FIG. 6 is a schematic diagram of an electric apparatus using a battery cell as a power source according to an embodiment of this application.

FIG. 7 is an SEM image of a precursor material prepared in Example 1 of this application.

FIG. 8 is an SEM image of a positive electrode material prepared in Example 1 of this application.

FIG. 9 shows distribution of manganese, iron, phosphorus, and cobalt elements in the positive electrode material prepared in Example 1 of this application.

Description of reference signs:

1. battery pack; 2. upper box body; 3. lower box body; 4. battery module; 5. battery cell; 51. housing; 52. electrode assembly; 53. top cover assembly.

**DESCRIPTION OF EMBODIMENTS**

Embodiments that specifically disclose a negative electrode active material and a manufacturing method thereof, a positive electrode plate, a negative electrode plate, a battery cell, a battery module, a battery pack, and an electric apparatus of this application will be described below in detail with reference to the drawings as appropriate. However, unnecessary detailed descriptions may be omitted. For example, detailed descriptions of well-known matters and redundant descriptions of substantially identical structures may be omitted. This is to avoid unnecessarily lengthy descriptions and facilitate understanding by persons skilled in the art. Additionally, the drawings and the following descriptions are provided to enable persons skilled in the art to fully understand this application and are not intended to limit the subject matter described in the claims.

The "ranges" disclosed in this application are defined in the form of lower and upper limits, and a given range is defined by selecting a lower limit and an upper limit, where the selected lower and upper limits define the boundaries of a specific range. Ranges defined in this manner may include or exclude the endpoints and may be arbitrarily combined, meaning that any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any real number combination between a and b, where both a and b are real numbers. For example, the numerical range "0-5" means that all real numbers between "0-5" have been listed herein, and "0-5" is merely an abbreviated representation of these numerical combinations. Additionally, when a parameter is expressed as an integer being greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, a particle size $D_v50$ in this application refers to a particle size when a cumulative volume distribution percentage of particles reaches 50%.

[Battery cell]

A battery cell, also known as a rechargeable battery or a storage battery, refers to a battery whose active material can be activated for continuous use through charging after the battery is discharged.

Typically, a battery cell includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is disposed between the positive electrode plate and the negative electrode plate to mainly prevent short circuits between positive and negative electrodes and to allow the active ions to pass through. The electrolyte is located between the positive electrode plate and the negative electrode plate to mainly conduct active ions.

[Method for preparing positive electrode material]

An embodiment of this application provides a method for preparing a positive electrode material, including the following steps:

mixing a precursor material, a lithium source, and an optional phosphorus source, and sintering to obtain a pre-product, where the precursor material includes a compound $Mn_xFe_yM_{(1-x-y)}HPO_4 \cdot nH_2O$, $0.9 \leq x+y < 1$ (for example, x+y is 0.9, 0.93, 0.95, 0.97, 0.98, 0.99, 0.991, 0.992, 0.993, 0.994, 0.995, 0.996, 0.997, 0.998, 0.999, or a range defined by any of the above values), $0 < x \leq 0.9$ (for example, x is 0.1, 0.2, 0.3, 0.4, 0.5, 0.513, 0.52, 0.53, 0.55, 0.57, 0.59, 0.597, 0.6, 0.63, 0.65, 0.66, 0.68, 0.7, 0.8, 0.9, or a range defined by any of the above values), $0 < y \leq 0.9$ (for example, y is 0.1, 0.2, 0.3, 0.31, 0.32, 0.33, 0.336, 0.34, 0.38, 0.398, 0.4, 0.45, 0.479, 0.48, 0.5, 0.6, 0.7, 0.8, 0.9, or a range defined by any of the above values), $0 < n \leq 6$ (for example, n is 1, 2, 3, 4, 5, 6, or a range defined by any of the above values), and M includes one or more of transition metal elements other than manganese and iron, Group IIA metal elements, Group IIIA metal elements, and Group IVA metal elements; and
mixing the pre-product, a carbon source, and a solvent, drying, and sintering to obtain a positive electrode material.

Although the mechanism is not fully understood, the applicant has unexpectedly found that the precursor material used in this application has uniform distribution of manganese, iron, phosphorus, and doping elements, exhibits stable composition, and is not prone to element segregation. Using this precursor material as the raw material can improve the element distribution uniformity and material stability of the positive electrode material, thereby improving the specific capacity and cycling performance of a battery. Additionally, in the steps of preparing the pre-product, through sintering, volatile substances are evaporated, resulting in a dense pre-product. Subsequently, a coating layer is prepared on the pre-product, which is conducive to increasing the density of the coating layer, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large, thereby improving the processability of the material.

In some embodiments, the positive electrode material includes a core and a coating layer coating the core, where the core includes a compound $LiMn_xFe_yM_{(1-x-y)}PO_4$, $0.9 \leq x+y < 1$ (for example, x+y is 0.9, 0.93, 0.95, 0.97, 0.98, 0.99, 0.991, 0.992, 0.993, 0.994, 0.995, 0.996, 0.997, 0.998, 0.999, or a range defined by any of the above values), $0 < x \leq 0.9$ (for example, x is 0.1, 0.2, 0.3, 0.4, 0.5, 0.513, 0.52, 0.53, 0.55, 0.57, 0.59, 0.597, 0.6, 0.63, 0.65, 0.66, 0.68, 0.7, 0.8, 0.9, or a range defined by any of the above values), $0 < y \leq 0.9$ (for example, y is 0.1, 0.2, 0.3, 0.31, 0.32, 0.33, 0.336, 0.34, 0.38, 0.398, 0.4, 0.45, 0.479, 0.48, 0.5, 0.6, 0.7, 0.8, 0.9, or a range defined by any of the above values), and M includes one or more of transition metal elements other than manganese and iron, Group IIA metal elements, Group IIIA metal elements, and Group IVA metal elements; and the coating layer includes carbon.

In some embodiments, $0.992 \leq x+y < 0.995$; and/or

$$0.513 \leq x \leq 0.658;$$

and/or

$$0.336 \leq y \leq 0.479;$$

and/or

$$0 \leq n \leq 1;$$

and/or
M includes one or more elements of titanium, magnesium, aluminum, vanadium, zinc, cobalt, nickel, tin, niobium, tungsten, zirconium, tantalum, cerium, and europium.

In some embodiments, a particle size $D_v50$ of the precursor material is 3-100 $\mu m$, optionally 5-50 $\mu m$, and more optionally 8-20 $\mu m$, for example, 3 $\mu m$, 5 $\mu m$, 7 $\mu m$, 8 $\mu m$, 10 $\mu m$, 12 $\mu m$, 15 $\mu m$, 17 $\mu m$, 18 $\mu m$, 20 $\mu m$, 22 $\mu m$, 24 $\mu m$, 26 $\mu m$, 28 $\mu m$, 30 $\mu m$, 32 $\mu m$, 35 $\mu m$, 37 $\mu m$, 38 $\mu m$, 40 $\mu m$, 45 $\mu m$, 50 $\mu m$, 55 $\mu m$, 60 $\mu m$, 65 $\mu m$, 70 $\mu m$, 80 $\mu m$, 90 $\mu m$, 100 $\mu m$, or a range defined by any of the above values; and/or

a compacted density of the precursor material at 30 MPa is 1.35-2.5 $g/cm^3$, optionally 1.5-2.5 $g/cm^3$, for example, 1.35 $g/cm^3$, 1.4 $g/cm^3$, 1.5 $g/cm^3$, 1.6 $g/cm^3$, 1.7 $g/cm^3$, 1.8 $g/cm^3$, 1.9 $g/cm^3$, 2.0 $g/cm^3$, 2.1 $g/cm^3$, 2.2 $g/cm^3$, 2.3 $g/cm^3$, 2.4 $g/cm^3$, 2.5 $g/cm^3$, or a range defined by any of the above values; and/or
a mass percentage of the compound $Mn_xFe_yM_{(1-x-y)}HPO_4 \cdot nH_2O$ in the precursor material is 98%-100%, for example, 98.5%, 99%, 99.1%, 99.3%, 99.5%, 99.6%, 99.7%, 99.8%, 99.9%, 100%, or a range defined by any of the above values; and/or
the precursor material includes primary crystalline particles with polyhedral morphology.

The particle size $D_v50$ of the precursor material of this application being within the above range facilitates the washing and filtration operations during the preparation of the precursor, improving the yield of the precursor material. Additionally, during the preparation of the positive electrode material, the suspension of precursor particles is facilitated, making the precursor particles less likely to settle, thereby improving the efficiency of the mixing and grinding processes.

The compacted density of the precursor material of this application being within the above range is conducive to increasing the compacted density of the positive electrode material, thereby increasing the specific capacity of the battery.

The high compound content and low impurity content in the precursor material of this application result in a positive electrode material with low impurity content, improving the specific capacity and cycling performance of the battery.

The precursor material of this application includes primary crystalline particles with polyhedral morphology, where the primary crystalline particles have flat and regular crystal planes and smaller inter-particle gaps. This is conducive to increasing the compacted density of the precursor material.

In some embodiments, the precursor material is prepared by the following steps:

dissolving a soluble manganese source, a soluble iron source, and a soluble source of element M in a solvent to obtain a solution;
slowly adding the solution to a phosphoric acid solution for reaction, followed by optional aging, to obtain a reaction product; and
filtering the reaction product and drying the resulting filter residue to obtain the precursor material.

Thus, in this application, the soluble manganese source, the soluble iron source, and the soluble source of element M are first prepared into a stable and uniform solution, then the solution is slowly added to the phosphoric acid solution to control and reduce side reactions, followed by optional aging and drying of the resulting filter residue, resulting in a precursor material with uniform composition, good batch consistency, and low impurity content. The positive electrode material prepared using this precursor material exhibits uniform element distribution and good batch consistency, thereby improving the specific capacity and cycling performance of the battery.

In some embodiments, in the steps of preparing the precursor material,

the soluble manganese source includes one or more of a soluble organic manganese source and a soluble inorganic manganese source, optionally a soluble organic manganese source, more optionally one or more of soluble organic acid salts of manganese, and further optionally one or more of manganous acetate, manganous formate, manganous citrate, and manganous 2-hydroxypropionate; and/or
the soluble iron source includes one or more of a soluble organic iron source and a soluble inorganic iron source, optionally a soluble organic iron source, more optionally one or more of soluble organic acid salts of iron, and further optionally one or more of ferrous acetate, ferrous formate, ferrous citrate, and ferrous 2-hydroxypropionate; and/or
the soluble source of element M includes one or more of an inorganic source of element M and an organic source of element M, optionally one or more of soluble organic acid salts and soluble inorganic acid salts of element M, and more optionally one or more of sulfates, nitrates, chlorides, formates, acetates, citrates, and 2-hydroxypropionates of element M.

Using the soluble organic manganese source and/or the soluble organic iron source is conducive to reducing the impurity content in the precursor material and improving batch consistency, thereby improving the specific capacity and cycling performance of the battery.

In some embodiments, in the steps of preparing the precursor material,

the solution is slowly added to the phosphoric acid solution for reaction at 25°C-95°C, and optionally, the solution is slowly added to the phosphoric acid solution for reaction at 30°C-90°C, for example, the solution is slowly added to the phosphoric acid solution for reaction at 25°C, 30°C, 35°C, 40°C, 45°C, 50°C, 55°C, 60°C, 65°C, 70°C, 75°C, 80°C, 85°C, 90°C, 95°C, or a range defined by any of the above values; and/or

an addition time of the solution is 10-300 min, optionally 15-300 min, and more optionally 60-180 min, for example, 10 min, 15 min, 20 min, 30 min, 40 min, 50 min, 60 min, 70 min, 80 min, 90 min, 100 min, 120 min, 140 min, 150 min, 170 min, 180 min, 200 min, 220 min, 240 min, 250 min, 270 min, 280 min, 290 min, 300 min, or a range defined by any of the above values; and/or

a molar ratio of a phosphoric acid in the phosphoric acid solution to the total metal elements in the solution is 0.4-1.5, optionally 0.5-1.5, and more optionally 0.8-1.2, for example, 0.4, 0.5, 0.6, 0.7, 0.8, 0.9, 1, 1.1, 1.2, 1.3, 1.4, 1.5, or a range defined by any of the above values; and/or

a total concentration of the metal elements in the solution is 0.1-3.0 mol/L, optionally 0.5-2.5 mol/L, and more optionally 1.0-1.6 mol/L, for example, 0.1 mol/L, 0.3 mol/L, 0.5 mol/L, 0.7 mol/L, 0.8 mol/L, 1.0 mol/L, 1.1 mol/L, 1.3 mol/L, 1.5 mol/L, 1.7 mol/L, 1.9 mol/L, 2.0 mol/L, 2.1 mol/L, 2.3 mol/L, 2.5 mol/L, 2.7 mol/L, 2.8 mol/L, 2.9 mol/L, 3.0 mol/L, or a range defined by any of the above values; and/or

a concentration of the phosphoric acid in the phosphoric acid solution is 0.1-3.0 mol/L, optionally 0.5-2.5 mol/L, and more optionally 1.0-1.32 mol/L, for example, 0.1 mol/L, 0.3 mol/L, 0.5 mol/L, 0.7 mol/L, 0.8 mol/L, 1.0 mol/L, 1.1 mol/L, 1.2 mol/L, 1.3 mol/L, 1.4 mol/L, 1.5 mol/L, 1.7 mol/L, 1.9 mol/L, 2.0 mol/L, 2.1 mol/L, 2.3 mol/L, 2.5 mol/L, 2.7 mol/L, 2.8 mol/L, 2.9 mol/L, 3.0 mol/L, or a range defined by any of the above values; and/or

a molar amount of element M in the solution accounts for 0.1%-10% of a total molar amount of metal elements, for example, 0.1%, 0.5%, 1%, 1.5%, 2%, 2.5%, 3%, 3.5%, 4%, 4.5%, 5%, 5.5%, 6%, 6.5%, 7%, 8%, 9%, 10%, or a range defined by any of the above values; and/or

a molar amount of the Mn element in the solution accounts for 30%-85% of the total molar amount of the metal elements, for example, 30%, 35%, 40%, 45%, 50%, 51%, 53%, 55%, 58%, 59%, 60%, 64%, 65%, 66%, 67%, 70%, 75%, 80%, 85%, or a range defined by any of the above values.

In this application, controlling the ambient temperature at which the mixed metal solution is added to the phosphoric acid solution can reduce side reactions, resulting in a precursor material with uniform composition, good batch consistency, and low impurity content, thereby improving the specific capacity and cycling performance of the battery.

In this application, controlling the speed of adding the solution to the phosphoric acid solution is conducive to controlling and reducing side reactions, resulting in a precursor material with uniform composition, good batch consistency, and low impurity content, thereby improving the electrical performance of the battery.

In this application, controlling the molar ratio of the phosphoric acid to the total metal elements can increase the specific capacity of the battery.

In this application, controlling the concentration of each metal element in the solution can adjust the molar ratio of each metal element in the precursor product.

In some embodiments, in the steps of preparing the precursor material,

an aging temperature is 40°C-98°C, optionally 60°C-95°C, for example, 40°C, 45°C, 50°C, 55°C, 60°C, 65°C, 70°C, 75°C, 80°C, 85°C, 90°C, 95°C, 98°C, or a range defined by any of the above values; and/or

an aging time is 10-500 min, optionally 30-300 min, for example, 10 min, 20 min, 30 min, 50 min, 60 min, 80 min, 100 min, 120 min, 150 min, 170 min, 190 min, 200 min, 230 min, 250 min, 270 min, 280 min, 300 min, 320 min, 340 min, 350 min, 380 min, 400 min, 430 min, 450 min, 470 min, 480 min, 500 min, or a range defined by any of the above values; and/or

the reaction and/or aging is performed under a condition with a pH value of 1.5-4.5 (for example, 1.5, 2, 3, 4, 4.5, or a range defined by any of the above values); and/or

the reaction and/or aging is performed under a stirring condition.

Aging facilitates the growth of precipitate crystals, reducing a proportion of amorphous particles in the precursor material, thereby obtaining a precursor material with good crystallinity and high compacted density, thus improving the specific capacity and cycling performance of the battery.

In some embodiments, in the steps of preparing the precursor material,

the dissolution is performed at 25°C-80°C, optionally at 25°C-40°C, for example, at 25°C, 30°C, 35°C, 40°C, 45°C, 50°C, 60°C, 70°C, 80°C, or a range defined by any of the above values; and/or

the solvent is water; and/or
the filtration is vacuum filtration, pressure filtration, or centrifugal filtration; and/or
before the drying, the filter residue is washed, and optionally, the filter residue is washed with water; and/or
a drying temperature is 80°C-500°C, optionally 120°C-400°C, and more optionally 150°C-300°C, for example, 80°C, 90°C, 100°C, 120°C, 140°C, 150°C, 160°C, 170°C, 200°C, 230°C, 250°C, 270°C, 300°C, 320°C, 340°C, 360°C, 380°C, 400°C, 430°C, 450°C, 470°C, 480°C, 500°C, or a range defined by any of the above values; and/or
a drying time is 10-300 min, for example, 10 min, 20 min, 30 min, 50 min, 60 min, 80 min, 100 min, 120 min, 140 min, 160 min, 180 min, 200 min, 220 min, 240 min, 250 min, 270 min, 290 min, 300 min, or a range defined by any of the above values.

In some embodiments, in the steps of preparing the pre-product,

a molar ratio of the precursor material to the lithium element in the lithium source is 0.9:1-1.1:1, for example, 0.9:1, 0.93:1, 0.95:1, 0.97:1, 0.98:1, 0.99:1, 1.0:1, 1.03:1, 1.05:1, 1.07:1, 1.08:1, 1.09:1, 1.1:1, or a range defined by any of the above values; and/or
a molar ratio of the phosphorus element in the phosphorus source to the lithium element in the lithium source is 1:1-1.05:1, for example, 1:1, 1.01:1, 1.02:1, 1.03:1, 1.04:1, 1.05:1, or a range defined by any of the above values; and/or
a mixing time is 0.5-4 h, for example, 0.5 h, 1 h, 1.5 h, 2 h, 2.5 h, 3 h, 3.5 h, 4 h, or a range defined by any of the above values; and/or
a sintering temperature is 350°C-900°C, optionally 450°C-800°C, e.g., 350°C, 380°C, 400°C, 450°C, 470°C, 500°C, 550°C, 600°C, 650°C, 700°C, 750°C, 800°C, 850°C, 870°C, 900°C, or a range defined by any of the above values; and/or
a sintering time is 3-10 h, for example, 3 h, 4 h, 5 h, 6 h, 7 h, 8 h, 9 h, 10 h, or a range defined by any of the above values.

The mixing operation is conducive to increasing the surface energy of particles, enhancing solid-solid reaction activity, shortening a diffusion path of lithium into the crystal interior of the precursor material, and making the reaction to form the pre-product more complete, thereby improving the electrical performance of the battery.

The sintering temperature and sintering time used facilitate the evaporation of volatile substances, resulting in a dense pre-product.

In some embodiments, in the steps of preparing the positive electrode material,

a weight ratio of the pre-product to the carbon source is 3:1-30:1, optionally 5:1-15:1, for example, 3:1, 4:1, 5:1, 7:1, 8:1, 10:1, 12:1, 13:1, 14:1, 15:1, 16:1, 17:1, 18:1, 20:1, 22:1, 24:1, 25:1, 26:1, 27:1, 28:1, 30:1, or a range defined by any of the above values; and/or
a ratio of a weight of the solvent to a total weight of the carbon source and the pre-product is 1:1-10:1, for example, 1:1, 2:1, 3:1, 4:1, 5:1, 6:1, 7:1, 8:1, 9:1, 10:1, or a range defined by any of the above values; and/or
a mixing time is 2-8 h, for example, 2 h, 3 h, 4 h, 5 h, 6 h, 7 h, 8 h, or a range defined by any of the above values; and/or
the drying is performed by spray drying; and/or
an inlet temperature of the spray drying is 100°C-280°C, for example, 100°C, 150°C, 200°C, 250°C, 280°C, or a range defined by any of the above values; and/or
an outlet temperature of the spray drying is 50°C-180°C, for example, 50°C, 70°C, 100°C, 130°C, 150°C, 170°C, 180°C, or a range defined by any of the above values; and/or
a sintering temperature is 500°C-900°C, optionally 600°C-800°C, for example, 500°C, 550°C, 600°C, 650°C, 700°C, 750°C, 800°C, 850°C, 900°C, or a range defined by any of the above values; and/or
a sintering time is 8-20 h, for example, 8 h, 9 h, 10 h, 12 h, 14 h, 16 h, 18 h, 20 h, or a range defined by any of the above values.

The sintering temperature and sintering time used facilitate complete reaction, preparing a coating layer with good density on the pre-product, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large.

In some embodiments, the lithium source includes one or more of organic acid salts, inorganic acid salts, oxides, and hydroxides of lithium, optionally one or more of lithium carbonate, lithium hydroxide, lithium acetate, and lithium oxide; and/or

the phosphorus source includes one or more of phosphates, hydrogen phosphates, and dihydrogen phosphates, optionally one or more of lithium phosphate, lithium dihydrogen phosphate, dilithium hydrogen phosphate, manganese hydrogen phosphate, ammonium dihydrogen phosphate, diammonium hydrogen phosphate, and manganese iron hydrogen phosphate; and/or

the carbon source includes one or more of an organic carbon source and an inorganic carbon source, optionally one or more of methanol, ethanol, acetic acid, polyethylene glycol, polyvinyl alcohol, polyvinyl butyral, glucose, maltose, and polytetrafluoroethylene; and/or

the solvent includes one or more of water, ethanol, and acetone.

In some embodiments, in the phosphorus source, the hydrogen phosphate does not include the precursor material.

[Positive electrode material]

An embodiment of this application provides a positive electrode material including a core and a coating layer coating the core, where the core includes a compound $LiMn_xFe_yM_{(1-x-y)}PO_4$, $0.9 \leq x+y < 1$ (for example, x+y is 0.9, 0.93, 0.95, 0.97, 0.98, 0.99, 0.991, 0.992, 0.993, 0.994, 0.995, 0.996, 0.997, 0.998, 0.999, or a range defined by any of the above values), $0 < x \leq 0.9$ (for example, x is 0.1, 0.2, 0.3, 0.4, 0.5, 0.513, 0.52, 0.53, 0.55, 0.57, 0.59, 0.597, 0.6, 0.63, 0.65, 0.66, 0.68, 0.7, 0.8, 0.9, or a range defined by any of the above values), $0 < y \leq 0.9$ (for example, y is 0.1, 0.2, 0.3, 0.31, 0.32, 0.33, 0.336, 0.34, 0.38, 0.398, 0.4, 0.45, 0.479, 0.48, 0.5, 0.6, 0.7, 0.8, 0.9, or a range defined by any of the above values), and M includes one or more of transition metal elements other than manganese and iron, Group IIA metal elements, Group IIIA metal elements, and Group IVA metal elements, optionally one or more elements of titanium, magnesium, aluminum, vanadium, zinc, cobalt, nickel, tin, niobium, tungsten, zirconium, tantalum, cerium, and europium; and the coating layer includes carbon.

Thus, the precursor material used in this application has uniform distribution of manganese, iron, phosphorus, and doping elements, exhibits stable composition, and is not prone to element segregation. Using this precursor material as the raw material can improve the element distribution uniformity and material stability of the positive electrode material, thereby improving the specific capacity and cycling performance of a battery. Additionally, in the steps of preparing the pre-product, through sintering, volatile substances are evaporated, resulting in a dense pre-product. Subsequently, a coating layer is prepared on the pre-product, which is conducive to increasing the density of the coating layer, reducing micropores on the coating layer, increasing a compacted density of the material, and reducing a powder resistivity of the material, thereby further improving the specific capacity and cycling performance of the battery. Additionally, the increased density of the coating layer is conducive to controlling a specific surface area of the material not to be excessively large, thereby improving the processability of the material.

In some embodiments, a compacted density of the positive electrode material at 30 MPa is 1.88-2.52 $g/cm^3$, optionally 2.0-2.5 $g/cm^3$, for example, 1.88 $g/cm^3$, 1.9 $g/cm^3$, 2.0 $g/cm^3$, 2.1 $g/cm^3$, 2.2 $g/cm^3$, 2.3 $g/cm^3$, 2.5 $g/cm^3$, 2.52 $g/cm^3$, or a range defined by any of the above values; and/or

a BET specific surface area of the positive electrode material at a liquid nitrogen temperature is 9.87-22.34 $m^2/g$, optionally 12-18 $m^2/g$, for example, 9.87 $m^2/g$, 10 $m^2/g$, 11 $m^2/g$, 12 $m^2/g$, 13 $m^2/g$, 15 $m^2/g$, 18 $m^2/g$, 20 $m^2/g$, 21 $m^2/g$, 22 $m^2/g$, 22.34 $m^2/g$, or a range defined by any of the above values; and/or

a powder resistivity of the positive electrode material is 1-1893 $\Omega \cdot cm$, optionally 12-1000 $\Omega \cdot cm$, for example, 1 $\Omega \cdot cm$, 6 $\Omega \cdot cm$, 10 $\Omega \cdot cm$, 12 $\Omega \cdot cm$, 15 $\Omega \cdot cm$, 20 $\Omega \cdot cm$, 23 $\Omega \cdot cm$, 25 $\Omega \cdot cm$, 27 $\Omega \cdot cm$, 30 $\Omega \cdot cm$, 33 $\Omega \cdot cm$, 35 $\Omega \cdot cm$, 38 $\Omega \cdot cm$, 40 $\Omega \cdot cm$, 50 $\Omega \cdot cm$, 60 $\Omega \cdot cm$, 70 $\Omega \cdot cm$, 80 $\Omega \cdot cm$, 100 $\Omega \cdot cm$, 200 $\Omega \cdot cm$, 300 $\Omega \cdot cm$, 500 $\Omega \cdot cm$, 600 $\Omega \cdot cm$, 800 $\Omega \cdot cm$, 900 $\Omega \cdot cm$, 950 $\Omega \cdot cm$, 1000 $\Omega \cdot cm$, 1050 $\Omega \cdot cm$, 1100 $\Omega \cdot cm$, 1200 $\Omega \cdot cm$, 1400 $\Omega \cdot cm$, 1500 $\Omega \cdot cm$, 1700 $\Omega \cdot cm$, 1750 $\Omega \cdot cm$, 1800 $\Omega \cdot cm$, 1850 $\Omega \cdot cm$, 1893 $\Omega \cdot cm$, or a range defined by any of the above values; and/or

the positive electrode material is prepared by the method described above in this application.

In this application, the particle size $D_v50$ is tested using conventional methods in the field. For example, a sample is added to water, such that the sample is fully dispersed, and the particle size $D_v50$ of the material is tested using a laser particle size analyzer.

In this application, the compacted density is tested using conventional methods in the field. For example, a sample is placed in a mold of a compacted density tester, the tester automatically applies a certain pressure to compact the powder, and the volume of the powder is calculated based on a cross-sectional area of the mold and a thickness of the powder at this time. The compacted density of the powder material is calculated as the compacted density being equal to mass/volume.

In this application, the BET specific surface area is tested using conventional methods in the field. For example, a sample is placed in a specific surface area test tube, the specific surface area test tube is then placed into a specific surface area analyzer, a liquid nitrogen cup is filled with liquid nitrogen and fits around the specific surface area test tube, and then the BET specific surface area is tested.

In this application, the powder resistivity is tested using conventional methods in the field. For example, a sample is placed in a mold, then the mold is placed into a four-probe resistivity tester, the pressure is adjusted to a specified pressure, and after the mold height and the pressure are both stable, a forward resistivity and a reverse resistivity of the sample are respectively tested, with an average of the two taken as the powder resistivity of the sample.

[Positive electrode plate]

The positive electrode plate typically includes a positive electrode current collector and a positive electrode film layer disposed on at least one surface of the positive electrode current collector, where the positive electrode film layer includes the foregoing positive electrode material.

During charging and discharging of a battery, deintercalation and consumption of Li occur, and the molar content of Li in the battery varies at different states of discharge. In the enumeration of the positive electrode material in this application, the molar content of Li is an initial state of the material, that is, a state before feeding. The molar content of Li varies after the positive electrode material is applied to a battery system and undergoes charge and discharge cycles.

In the enumeration of the positive electrode material in this application, the molar content of O is only a theoretical state value, and lattice oxygen release causes the molar content of oxygen to vary, resulting in fluctuations in the actual molar content of O.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode material may further include positive electrode materials known in the art for batteries. For example, the positive electrode material may include at least one of the following materials: lithium transition metal oxides and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include but are not limited to at least one of lithium cobalt oxide (for example, $LiCoO_2$), lithium nickel oxide (for example, $LiNiO_2$), lithium manganese oxide (for example, $LiMnO_2$ or $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also referred to as NCM333), $LiNi_{0.5}Co_{0.2}Mn_{0.3}O_2$ (also referred to as NCM523), $LiNi_{0.5}Co_{0.25}Mn_{0.25}O_2$ (also referred to as NCM211), $LiNi_{0.6}Co_{0.2}Mn_{0.2}O_2$ (also referred to as NCM622), $LiNi_{0.8}Co_{0.1}Mn_{0.1}O_2$ (also referred to as NCM811), lithium nickel cobalt aluminum oxide (for example, $LiNi_{0.85}Co_{0.15}Al_{0.05}O_2$), and their modified compounds.

In some embodiments, the positive electrode film layer may optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by the following method: the components for preparing the positive electrode plate, such as the positive electrode active material, the conductive agent, the binder, and any other components, are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, the conductive agent, the binder, and any other components, are dispersed in a solvent (for example, deionized water) to form a negative electrode slurry; and the negative electrode slurry is applied on the negative electrode current collector, followed by processes such as drying and cold pressing, to obtain the negative electrode plate.

[Electrolyte]

The electrolyte conducts ions between the positive electrode plate and the negative electrode plate. This application does not specifically limit the type of the electrolyte. The electrolyte can be selected based on needs. For example, the electrolyte may be in a liquid state, a gel state, or an all-solid state.

In some embodiments, the electrolyte is in a liquid state and includes an electrolytic salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. For example, the additive may include a negative electrode film-forming additive and a positive electrode film-forming additive, and may further include an additive that can improve some performance of the battery, for example, an additive for improving overcharge performance of the battery and an additive for improving high-temperature performance or low-temperature performance of the battery

[Separator]

In some embodiments, the battery cell further includes a separator. This application does not particularly limit the type of the separator, and the separator may be any well-known porous separator with good chemical stability and mechanical stability.

In some embodiments, the material of the separator may be selected from at least one of glass fiber, non-woven fabric, polyethylene, polypropylene, and polyvinylidene fluoride. The separator may be a single-layer film or a multilayer composite film, without particular limitation. When the separator is a multilayer composite film, the materials of the layers may be the same or different, without particular limitation.

In some embodiments, the positive electrode plate, the negative electrode plate, and the separator may be formed into an electrode assembly through a winding process or a stacking process.

In some embodiments, the battery cell may include an outer package. The outer package may be used to encapsulate the electrode assembly and the electrolyte.

In some embodiments, the outer package of the battery cell may be a hard shell, such as a hard plastic shell, aluminum shell, or steel shell. The outer package of the battery cell may alternatively be a soft pack, for example, a soft pouch. The material of the soft pack may be plastic. As the plastic, polypropylene, polybutylene terephthalate, polybutylene succinate, and the like may be listed.

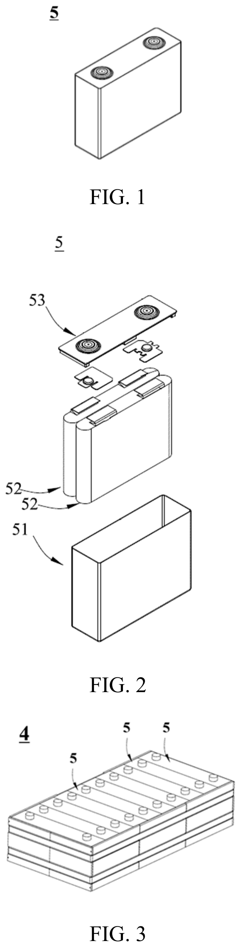

This application does not particularly limit the shape of the battery cell. The battery cell may be cylindrical, rectangular, or of any other shapes. For example, FIG. 1 shows a battery cell 5 with a rectangular structure as an example.

In some embodiments, referring to FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through a winding process or a stacking process. The electrode assembly 52 is encapsulated in the accommodating cavity. The electrolyte infiltrates the electrode assembly 52. The battery cell 5 may include one or more electrode assemblies 52, and persons skilled in the art may select based on specific actual needs.

In some embodiments, the battery cell may be assembled into a battery module, and the battery module may include one or more battery cells. The specific quantity may be chosen by persons skilled in the art according to the application and capacity of the battery module.

FIG. 3 shows a battery module 4 as an example. Referring to FIG. 3, in the battery module 4, a plurality of battery cells 5 may be arranged sequentially along a length direction of the battery module 4. Certainly, the battery cells may alternatively be arranged in any other manners. Further, the plurality of battery cells 5 may be fixed by fasteners.

Optionally, the battery module 4 may further include an enclosure with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according to the application and capacity of the battery pack.

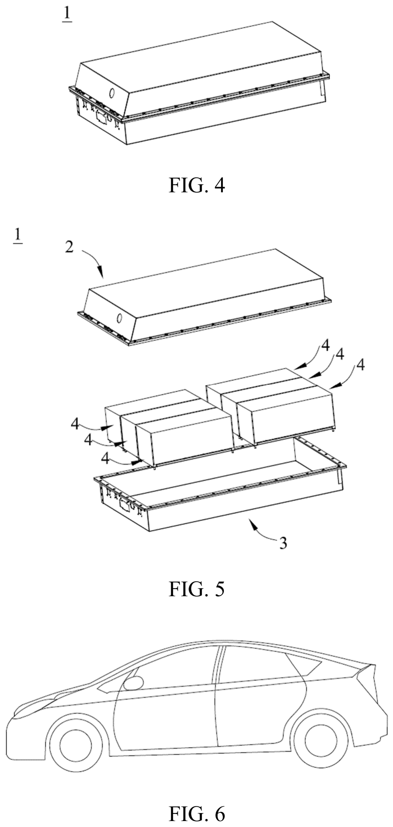

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3, where the upper box body 2 can fit the lower box body 3 to form a closed space for accommodating the battery modules 4. The plurality of battery modules 4 may be arranged in the battery box in any manner.

Additionally, this application further provides an electric apparatus. The electric apparatus includes at least one of the battery cell, battery module, or battery pack provided by this application. The battery cell, the battery module, or the battery pack may be used as a power source for the electric apparatus or as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As an electric apparatus, a battery cell, a battery module, or a battery pack may be selected based on requirements for using the electric apparatus.

FIG. 6 shows an electric apparatus as an example. The electric apparatus is a pure electric vehicle, a hybrid electric vehicle, a plug-in hybrid electric vehicle, or the like. To satisfy requirements of the electric apparatus for high power and high energy density of a battery cell, a battery pack or a battery module may be used.

[Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

Example 1

(1) Preparation of precursor material:

According to a molar ratio of Mn:Fe:Co of 0.597:0.398:0.005, 2.866 mol of manganous acetate, 1.910 mol of ferrous acetate, and 0.024 mol of cobalt sulfate were added to a stirring tank, and pure water was added according to a total metal ion molar concentration of 1.60 mol/L. Stirring was performed to dissolve these materials. A stirring function and a water bath heating function were enabled. Then, the resulting solution was heated to 40°C and maintained at the temperature. After all the powder was dissolved, a 3.0 L metal salt solution was obtained for use.

According to a molar ratio of the total metal ions to phosphorus of 1:1.100, 5.280 mol of a concentrated phosphoric acid with a solute mass concentration of 85% was added to a stirring tank, and pure water was added according to a phosphoric acid solution molar concentration of 1.32 mol/L and stirred well. A water bath heating function was enabled. Then, the resulting solution was heated to 60°C and maintained at the temperature. A 4.0 L phosphoric acid solution was obtained for use.

The water bath temperature of the phosphoric acid solution was maintained at 60°C; and under a stirring condition, the above metal salt solution was uniformly added to the phosphoric acid solution using a metering pump for mixing and reaction, with a volume flow rate of the metal salt solution set at approximately 0.03 L/min, and the total addition time of the solution controlled at 100 min. After the addition was complete, under a stirring condition, the solution was heated to 85°C and aged for 120 min to ensure complete reaction, and a slurry was obtained. At that point, an online pH meter was used to test the system pH value as 2-3 during the addition, reaction, and aging processes.

The slurry was transferred to a vacuum filtration device with a maximum vacuum pressure of -0.06 MPa, and then the slurry was filtered to collect the solid precipitate; approximately 3.6 L of pure water was added for online washing to obtain a precursor filter cake; the precursor filter cake was transferred to a forced air drying oven and then dried at a drying temperature of 150°C for 120 min. At that point, the material was essentially constant in weight, and a precursor material was obtained.

(2) Preparation of positive electrode material:

Lithium carbonate and the precursor material were added to a colter mixer and mixed for 30 minutes, where a molar ratio of the lithium element to the precursor material was controlled at 1:1, a rotation speed of a colter spindle was controlled at 100 r/min, and a rotation speed of a chopper was controlled at 1440 r/min. Circulating cooling water was filled in a device jacket to prevent excessive temperature of the material, which could cause oxidation of iron and manganese, to obtain a first mixed powder with a mixing rate of 99%. The first mixed powder was loaded into a sagger. The sagger was placed in a box furnace, heated to 500°C at a heating speed of 5°C/min, sintered for 5 hours, and cooled to obtain a pre-product.

The pre-product was added to a stirring kettle. Glucose with a weight accounting for 15% of a weight of the pre-product and water with a weight equivalent to 1.5 times a total weight of the pre-product and glucose were added to the stirring kettle. The stirring kettle was turned on to stir for 2 hours at a stirring speed controlled at 200 rpm, to obtain a slurry. The slurry was spray-dried using a spray dryer, where the spray dryer had an inlet temperature of 200°C and an outlet temperature of 120°C, to obtain second mixed powder. The second mixed powder was loaded into a sagger. The sagger was placed in a box furnace, heated to 650°C at a heating speed of 5°C/min, sintered for 8 hours, and cooled to obtain a lithium cobalt manganese iron phosphate positive electrode material.

(3) Preparation of positive electrode plate:

0.3 g of a polyvinylidene fluoride (PVDF) binder was weighed using an analytical balance (with a precision of 0.0001 g), added to 10.8 g of N-methylpyrrolidone (NMP), and stirred until the binder was completely dissolved; then, 2.4 g of the above positive electrode material and 0.3 g of a carbon black conductive agent (SP) were added and stirred well to obtain a paste. The paste was evenly applied on an aluminum foil using a coater, dried in a vacuum drying oven to remove the solvent NMP, and then rolled and punched to obtain a disc with a diameter of 16.0 mm. The disc served as a positive electrode plate.

(4) Negative electrode plate: A lithium metal sheet was used.

(5) Separator: A PE-PP composite film was used.

(6) Preparation of electrolyte:

Ethylene carbonate (EC) and dimethyl carbonate (DMC) were mixed at a volume ratio of 1:1, and $LiPF_6$ was then dissolved well in the above solution to obtain an electrolyte. A concentration of $LiPF_6$ in the electrolyte was 1 mol/L.

(7) Preparation of secondary battery:

The above positive electrode plate, separator, negative electrode plate, and electrolyte were assembled into a CR2032 button battery.

Preparation methods of secondary batteries in Examples 2 to 42 and Comparative Example 1 were similar to the preparation method of the secondary battery in Example 1, with different preparation methods and product parameters detailed in Tables 1 to 4.

Example 42

(1) Preparation of precursor material:

According to a molar ratio of Mn:Fe:Co of 0.597:0.398:0.005, 2.866 mol of manganous acetate, 1.910 mol of ferrous acetate, and 0.024 mol of cobalt sulfate were added to a stirring tank, and pure water was added according to a total metal ion molar concentration of 1.60 mol/L. Stirring was performed to dissolve these materials. A water bath heating function was enabled. Then, the resulting solution was heated to 40°C and maintained at the temperature. After all the powder was dissolved, a 3.0 L metal salt solution was obtained for use.

According to a molar ratio of the total metal ions to phosphorus of 1:1.100, 5.280 mol of a concentrated phosphoric acid with a solute mass concentration of 85% was added to a stirring tank, and pure water was added according to a phosphoric acid solution molar concentration of 1.32 mol/L, and stirred well. A water bath heating function was enabled. Then, the resulting solution was heated to 60°C and maintained at the temperature. A 4.0 L phosphoric acid solution was obtained for use.

The water bath temperature of the phosphoric acid solution was maintained at 60°C; and under a stirring condition, the above metal salt solution was added all at once to the phosphoric acid solution for mixing and reaction. A mixed slurry was obtained at that point. An online pH meter was used to test the system pH value as 2-3 during the addition and reaction processes.

The slurry was transferred to a vacuum filtration device with a maximum vacuum pressure of -0.06 MPa, and then the slurry was filtered to collect the solid precipitate; approximately 3.6 L of pure water was added for online washing to obtain a precursor filter cake; the precursor filter cake was transferred to a forced air drying oven and then dried at a drying temperature of 150°C for 120 min. At that point, the material was essentially constant in weight, and the precursor material was obtained.

Steps (2) to (7) were the same as steps (2) to (7) of Example 1.

Comparative Example 1

(1) Preparation of positive electrode material

According to a molar ratio of Li:Mn:Fe:Co:$PO_4$ of 1.000:0.597:0.398:0.005:1.000, 2.400 mol of lithium carbonate and 4.800 mol of a concentrated phosphoric acid with a solute mass concentration of 85% were first added to 5945.63 g of pure water for mixing and reaction to obtain a lithium dihydrogen phosphate solution. Then, 2.866 mol of manganese oxalate, 1.910 mol of ferrous oxalate, 0.024 mol of cobalt oxalate, and 61.23 g of glucose were added and mixed well. The resulting mixture was ground in a ball mill to a particle size $D_v50$ of 0.8 $\mu$m, to obtain a slurry. The slurry was dried by spray drying with an inlet temperature of 220°C and an outlet temperature of 105°C, to obtain powder. The powder was sintered at 700°C for 12 h in a nitrogen atmosphere using an atmosphere box furnace, and a positive electrode material was obtained.

Steps (2) to (6) were the same as steps (3) to (7) of Example 1.

**Table 1: Parameters of preparation methods of precursors in Examples 1 to 41**

| No. | Manganese source | Iron source | M element source | Dissolution temperature (°C) | Molar ratio of M element to total metal elements in solution | Molar ratio of manganese element to total metal elements in solution | Total concentration of metal elements in solution (mol/L) | Concentration of phosphoric acid solution (mol/L) | Addition and reaction temperature (°C) | Addition time (min) | Molar ratio of phosphoric acid in phosphoric acid solution to total metal elements in solution | Aging temperature (°C) | Aging time (min) | System pH during addition, reaction, and aging | Drying temperature (°C) | Drying time (min) |
|---|---|---|---|---|---|---|---|---|---|---|---|---|---|---|---|---|
| Example 1 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 150 | 120 |
| Example 2 | Manganous acetate | Ferrous acetate | Cobalt sulfate | 40 | 0.50 % | 59.70 % | 1 | 1 | 60 | 30 | 1 | 65 | 30 | 2.5–3.5 | 150 | 120 |
| Example 3 | Manganous acetate | Ferrous acetate | Cobalt sulfate | 40 | 0.50 % | 59.70 % | 1.6 | 1.32 | 80 | 100 | 1.1 | 90 | 300 | 2.0–2.5 | 150 | 120 |
| Example 4 | Manganous acetate | Ferrous acetate | Cobalt sulfate | 40 | 0.50 % | 59.70 % | 1.6 | 1.32 | 60 | 30 | 1 | 75 | 60 | 2.5–3.5 | 150 | 120 |
| Example 5 | Manganous acetate | Ferrous acetate | Cobalt sulfate | 40 | 0.50 % | 59.70 % | 1.6 | 1.32 | 60 | 100 | 1.1 | 80 | 300 | 2.0–3.0 | 150 | 120 |
| Example 6 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 105 | 60 |
| Example 7 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 150 | 150 |
| Example 8 | Manganous acetate | Ferrous acetate | Cobalt sulfate | 30 | 0.50 % | 59.70 % | 1.6 | 1.32 | 30 | 100 | 1.1 | 85 | 120 | 2.0–3.0 | 150 | 120 |
| Example 9 | Manganous acetate | Ferrous acetate | Cobalt sulfate | 40 | 0.50 % | 59.70 % | 1.6 | 1.32 | 90 | 100 | 1.1 | 85 | 120 | 2.0–3.0 | 150 | 120 |
| Example 10 | Manganous acetate | Ferrous acetate | Cobalt sulfate | 40 | 0.50 % | 59.70 % | 1.6 | 1.32 | 60 | 15 | 1.1 | 85 | 120 | 2.0–3.0 | 150 | 120 |
| Example 11 | Manganous acetate | Ferrous acetate | Cobalt sulfate | 40 | 0.50 % | 59.70 % | 1.6 | 1.32 | 60 | 300 | 1.1 | 85 | 120 | 2.0–3.0 | 150 | 120 |
| Example 12 | Manganous acetate | Ferrous acetate | Cobalt sulfate | 40 | 0.50 % | 59.70 % | 1.6 | 1.32 | 60 | 100 | 0.5 | 85 | 120 | 1.5–2.5 | 150 | 120 |
| Example 13 | Manganous acetate | Ferrous acetate | Cobalt sulfate | 40 | 0.50 % | 59.70 % | 1.6 | 1.32 | 60 | 100 | 1.5 | 85 | 120 | 3.0–3.5 | 150 | 120 |
| Example 14 | Manganous acetate | Ferrous acetate | Cobalt sulfate | 40 | 0.50 % | 59.70 % | 1.6 | 1.32 | 60 | 100 | 1.1 | 60 | 300 | 2.0–3.0 | 150 | 120 |
| Example 15 | Manganous acetate | Ferrous acetate | Cobalt sulfate | 40 | 0.50 % | 59.70 % | 1.6 | 1.32 | 60 | 100 | 1.1 | 95 | 30 | 2.0–3.0 | 150 | 120 |
| Example 16 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 80 | 300 |
| Example 17 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 500 | 10 |
| Example 18 | Manganous acetate | Ferrous acetate | Magnesium sulfate | 40 | 0.50 % | 59.70 % | 1.6 | 1.32 | 60 | 100 | 1.1 | 85 | 120 | 2.0–3.0 | 150 | 120 |
| Example 19 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 150 | 120 |
| Example 20 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 150 | 120 |
| Example 21 | Manganous acetate | Ferrous acetate | Cobalt sulfate | 40 | 0.50 % | 59.70 % | 1.6 | 1.32 | 60 | 100 | 1.1 | 85 | 120 | 2.0–3.0 | 150 | 120 |

| No. | Manganese source | Iron source | M element source | Dissolution temperature (°C) | Molar ratio of M element to total metal elements in solution | Molar ratio of manganese element to total metal elements in solution | Total concentration of metal elements in solution (mol/L) | Concentration of phosphoric acid solution (mol/L) | Addition and reaction temperature (°C) | Addition time (min) | Molar ratio of phosphoric acid in phosphoric acid solution to total metal elements in solution | Aging temperature (°C) | Aging time (min) | System pH during addition, reaction, and aging | Drying temperature (°C) | Drying time (min) |
|---|---|---|---|---|---|---|---|---|---|---|---|---|---|---|---|---|
| Example 22 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 23 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 24 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 25 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 26 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 27 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 28 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 29 | Manganous acetate | Ferrous acetate | Nickel sulfate | 40 | 0.60% | 65.80% | 1.6 | 1.32 | 60 | 100 | 1.1 | 85 | 120 | 2.0–3.0 | 150 | 120 |
| Example 30 | Manganous acetate | Ferrous acetate | Europium sulfate | 40 | 0.80% | 51.30% | 1.6 | 1.32 | 60 | 100 | 1.1 | 85 | 120 | 2.0–3.0 | 150 | 120 |
| Example 31 | Manganous acetate | Ferrous acetate | Cobalt sulfate | 25 | 0.50% | 59.70% | 1.6 | 1.32 | 25 | 10 | 1.1 | 40 | 20 | 2.0–3.0 | 150 | 120 |
| Example 32 | Manganous acetate | Ferrous acetate | Cobalt sulfate | 40 | 0.50% | 59.70% | 1.6 | 1.32 | 95 | 100 | 1.1 | 85 | 120 | 2.0–3.0 | 150 | 120 |
| Example 33 | Manganous acetate | Ferrous acetate | Cobalt sulfate | 40 | 0.50% | 59.70% | 1.6 | 1.32 | 60 | 100 | 0.4 | 85 | 120 | 3.5~4.5 | 150 | 120 |
| Example 34 | Manganous acetate | Ferrous acetate | Cobalt sulfate | 40 | 0.50% | 59.70% | 1.6 | 1.32 | 95 | 100 | 1.1 | 40 | 500 | 2.0–3.0 | 150 | 120 |
| Example 35 | Manganous acetate | Ferrous acetate | Cobalt sulfate | 40 | 0.50% | 59.70% | 1.6 | 1.32 | 95 | 100 | 1.1 | 98 | 10 | 2.0–3.0 | 150 | 120 |
| Example 36 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 37 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 38 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 39 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 40 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |
| Example 41 | Manganous acetate | Ferrous acetate | Cobalt sulfate | 40 | 0.50% | 59.70% | 1.6 | 1.32 | 60 | 100 | 1.1 | 85 | 120 | 2.0–3.0 | 150 | 120 |

## Table 2: Parameters of preparation methods of positive electrode materials in Examples 1 to 42

| No. | Steps of preparing pre-product | | | | | | | Steps of preparing positive electrode material | | | | | | |
|---|---|---|---|---|---|---|---|---|---|---|---|---|---|---|
| | Lithium source | Molar ratio of precursor material to lithium element | Phosphorus source | Molar ratio of phosphorus element in phosphorus source to lithium element | Mixing time (h) | Sintering temperature (°C) | Sintering time (h) | Carbon source | Weight ratio of pre-product to carbon source | Mixing time (h) | Inlet temperature of spray drying (°C) | Outlet temperature of spray drying (°C) | Sintering temperature (°C) | Sintering time (h) |
| Example 1 | Lithium carbonate | 1:1 | / | / | 0.5 | 500 | 5 | Glucose | 6.67 | 2 | 200 | 120 | 650 | 8 |
| Example 2 | Lithium carbonate | 1:1 | / | / | 0.5 | 500 | 5 | Glucose | 6.67 | 2 | 200 | 120 | 650 | 8 |
| Example 3 | Lithium carbonate | 1:1 | / | / | 0.5 | 500 | 5 | Glucose | 6.67 | 2 | 200 | 120 | 650 | 8 |
| Example 4 | Lithium carbonate | 1:1 | / | / | 0.5 | 500 | 5 | Glucose | 6.67 | 2 | 200 | 120 | 650 | 8 |
| Example 5 | Lithium carbonate | 1:1 | / | / | 0.5 | 500 | 5 | Glucose | 6.67 | 2 | 200 | 120 | 650 | 8 |
| Example 6 | Lithium carbonate | 1:1 | / | / | 0.5 | 500 | 5 | Glucose | 6.67 | 2 | 200 | 120 | 650 | 8 |
| Example 7 | Lithium carbonate | 1:1 | / | / | 0.5 | 500 | 5 | Glucose | 6.67 | 2 | 200 | 120 | 650 | 8 |
| Example 8 | Lithium carbonate | 1:1 | / | / | 0.5 | 500 | 5 | Glucose | 6.67 | 2 | 200 | 120 | 650 | 8 |
| Example 9 | Lithium carbonate | 1:1 | / | / | 0.5 | 500 | 5 | Glucose | 6.67 | 2 | 200 | 120 | 650 | 8 |
| Example 10 | Lithium carbonate | 1:1 | / | / | 0.5 | 500 | 5 | Glucose | 6.67 | 2 | 200 | 120 | 650 | 8 |
| Example 11 | Lithium carbonate | 1:1 | / | / | 0.5 | 500 | 5 | Glucose | 6.67 | 2 | 200 | 120 | 650 | 8 |
| Example 12 | Lithium carbonate | 1:1 | / | / | 0.5 | 500 | 5 | Glucose | 6.67 | 2 | 200 | 120 | 650 | 8 |
| Example 13 | Lithium carbonate | 1:1 | / | / | 0.5 | 500 | 5 | Glucose | 6.67 | 2 | 200 | 120 | 650 | 8 |
| Example 14 | Lithium carbonate | 1:1 | / | / | 0.5 | 500 | 5 | Glucose | 6.67 | 2 | 200 | 120 | 650 | 8 |
| Example 15 | Lithium carbonate | 1:1 | / | / | 0.5 | 500 | 5 | Glucose | 6.67 | 2 | 200 | 120 | 650 | 8 |

| No. | Lithium source | Molar ratio of precursor material to lithium element | Phosphorus source | Molar ratio of phosphorus element in phosphorus source to lithium element | Mixing time (h) | Sintering temperature (°C) | Sintering time (h) | Carbon source | Weight ratio of pre-product to carbon source | Mixing time (h) | Inlet temperature of spray drying (°C) | Outlet temperature of spray drying (°C) | Sintering temperature (°C) | Sintering time (h) |
|---|---|---|---|---|---|---|---|---|---|---|---|---|---|---|
| | | Steps of preparing pre-product | | | | | | Steps of preparing positive electrode material | | | | | | |
| Example 16 | Lithium carbonate | 1:1 | / | / | 0.5 | 500 | 5 | Glucose | 6.67 | 2 | 200 | 120 | 650 | 8 |
| Example 17 | Lithium carbonate | 1:1 | / | / | 0.5 | 500 | 5 | Glucose | 6.67 | 2 | 200 | 120 | 650 | 8 |
| Example 18 | Lithium carbonate | 1:1 | / | / | 0.5 | 500 | 5 | Glucose | 6.67 | 2 | 200 | 120 | 650 | 8 |
| Example 19 | Lithium carbonate | 0.9:1 | / | / | 0.5 | 500 | 5 | Glucose | 6.67 | 2 | 200 | 120 | 650 | 8 |
| Example 20 | Lithium carbonate | 1.1:1 | / | / | 0.5 | 500 | 5 | Glucose | 6.67 | 2 | 200 | 120 | 650 | 8 |
| Example 21 | Lithium carbonate | 1:1 | / | / | 0.5 | 800 | 3 | Glucose | 6.67 | 2 | 200 | 120 | 650 | 8 |
| Example 22 | Lithium carbonate | 1:1 | / | / | 0.5 | 450 | 10 | Glucose | 6.67 | 2 | 200 | 120 | 650 | 8 |
| Example 23 | Lithium carbonate | 1:1 | / | / | 0.5 | 500 | 5 | Glucose | 5 | 2 | 200 | 120 | 650 | 8 |
| Example 24 | Lithium carbonate | 1:1 | / | / | 0.5 | 500 | 5 | Glucose | 15 | 2 | 200 | 120 | 650 | 8 |
| Example 25 | Lithium carbonate | 1:1 | / | / | 0.5 | 500 | 5 | Glucose | 6.67 | 8 | 200 | 120 | 650 | 8 |
| Example 26 | Lithium carbonate | 1:1 | / | / | 0.5 | 500 | 5 | Glucose | 6.67 | 2 | 200 | 120 | 800 | 8 |
| Example 27 | Lithium carbonate | 1:1 | / | / | 0.5 | 500 | 5 | Glucose | 6.67 | 2 | 200 | 120 | 600 | 20 |
| Example 28 | Lithium carbonate | 1:1 | Ammonium dihydrogen phosphate | 1.05:1 | 0.5 | 500 | 5 | Glucose | 6.67 | 2 | 200 | 120 | 650 | 8 |
| Example 29 | Lithium carbonate | 1:1 | / | / | 0.5 | 500 | 5 | Glucose | 6.67 | 2 | 200 | 120 | 650 | 8 |
| Example 30 | Lithium carbonate | 1:1 | / | / | 0.5 | 500 | 5 | Glucose | 6.67 | 2 | 200 | 120 | 650 | 8 |
| Example 31 | Lithium carbonate | 1:1 | / | / | 0.5 | 500 | 5 | Glucose | 6.67 | 2 | 200 | 120 | 650 | 8 |

| No. | Lithium source | Molar ratio of precursor material to lithium element | Phosphorus source | Molar ratio of phosphorus element in phosphorus source to lithium element | Mixing time (h) | Sintering temperature (°C) | Sintering time (h) | Carbon source | Weight ratio of pre-product to carbon source | Mixing time (h) | Inlet temperature of spray drying (°C) | Outlet temperature of spray drying (°C) | Sintering temperature (°C) | Sintering time (h) |
|---|---|---|---|---|---|---|---|---|---|---|---|---|---|---|
| | | | Steps of preparing pre-product | | | | | | Steps of preparing positive electrode material | | | | | |
| Example 32 | Lithium carbonate | 1:1 | / | / | 0.5 | 500 | 5 | Glucose | 6.67 | 2 | 200 | 120 | 650 | 8 |
| Example 33 | Lithium carbonate | 1:1 | / | / | 0.5 | 500 | 5 | Glucose | 6.67 | 2 | 200 | 120 | 650 | 8 |
| Example 34 | Lithium carbonate | 1:1 | / | / | 0.5 | 500 | 5 | Glucose | 6.67 | 2 | 200 | 120 | 650 | 8 |
| Example 35 | Lithium carbonate | 1:1 | / | / | 0.5 | 500 | 5 | Glucose | 6.67 | 2 | 200 | 120 | 650 | 8 |
| Example 36 | Lithium carbonate | 1:1 | / | / | 0.5 | 350 | 3 | Glucose | 6.67 | 2 | 200 | 120 | 650 | 8 |
| Example 37 | Lithium carbonate | 1:1 | / | / | 0.5 | 900 | 10 | Glucose | 6.67 | 2 | 200 | 120 | 650 | 8 |
| Example 38 | Lithium carbonate | 1:1 | / | / | 0.5 | 500 | 5 | Glucose | 3.00 | 2 | 200 | 120 | 650 | 8 |
| Example 39 | Lithium carbonate | 1:1 | / | / | 0.5 | 500 | 5 | Glucose | 30 | 2 | 200 | 120 | 650 | 8 |
| Example 40 | Lithium carbonate | 1:1 | / | / | 0.5 | 500 | 5 | Glucose | 6.67 | 2 | 200 | 120 | 500 | 8 |
| Example 41 | Lithium carbonate | 1:1 | / | / | 0.5 | 500 | 5 | Glucose | 6.67 | 2 | 200 | 120 | 900 | 20 |
| Example 42 | Lithium carbonate | 1:1 | / | / | 0.5 | 500 | 5 | Glucose | 6.67 | 2 | 220 | 105 | 700 | 12 |

**Table 3: Performance parameters of precursors in Examples 1 to 42**

| No. | Chemical formula of precursor | Particle size $D_v50$ (μm) | Compacted density at 30 MPa (g/cm$^3$) | Mass percentage of compound in precursor |
|---|---|---|---|---|
| Example 1 | $Mn_{0.597}Fe_{0.398}Co_{0.005}HPO_4 \cdot H_2O$ | 9.1 | 2.44 | 99.0% |
| Example 2 | $Mn_{0.597}Fe_{0.398}Co_{0.005}HPO_4 \cdot H_2O$ | 3.0 | 1.87 | 99.5% |
| Example 3 | $Mn_{0.597}Fe_{0.398}Co_{0.005}HPO_4 \cdot H_2O$ | 100.0 | 2.23 | 99.8% |
| Example 4 | $Mn_{0.597}Fe_{0.398}Co_{0.005}HPO_4 \cdot H_2O$ | 3.2 | 1.50 | 99.3% |
| Example 5 | $Mn_{0.597}Fe_{0.398}Co_{0.005}HPO_4 \cdot H_2O$ | 8.4 | 2.50 | 99.3% |
| Example 6 | $Mn_{0.597}Fe_{0.398}Co_{0.005}HPO_4 \cdot H_2O$ | 9.4 | 2.43 | 98.0% |

(continued)

| No. | Chemical formula of precursor | Particle size $D_v50$ ($\mu$m) | Compacted density at 30 MPa (g/cm$^3$) | Mass percentage of compound in precursor |
|---|---|---|---|---|
| Example 7 | $Mn_{0.597}Fe_{0.398}Co_{0.005}HPO_4 \cdot H_2O$ | 9.4 | 2.39 | 100.0% |
| Example 8 | $Mn_{0.597}Fe_{0.398}Co_{0.005}HPO_4 \cdot H_2O$ | 7.8 | 2.09 | 99.1% |
| Example 9 | $Mn_{0.597}Fe_{0.398}Co_{0.005}HPO_4 \cdot H_2O$ | 26.3 | 2.47 | 99.2% |
| Example 10 | $Mn_{0.597}Fe_{0.398}Co_{0.005}HPO_4 \cdot H_2O$ | 7.2 | 2.08 | 99.0% |
| Example 11 | $Mn_{0.597}Fe_{0.398}Co_{0.005}HPO_4 \cdot H_2O$ | 35.5 | 2.26 | 98.7% |
| Example 12 | $Mn_{0.597}Fe_{0.398}Co_{0.005}HPO_4 \cdot H_2O$ | 15.7 | 2.30 | 98.8% |
| Example 13 | $Mn_{0.597}Fe_{0.398}Co_{0.005}HPO_4 \cdot H_2O$ | 8.9 | 2.39 | 99.9% |
| Example 14 | $Mn_{0.597}Fe_{0.398}Co_{0.005}HPO_4 \cdot H_2O$ | 8.8 | 2.37 | 98.5% |
| Example 15 | $Mn_{0.597}Fe_{0.398}Co_{0.005}HPO_4 \cdot H_2O$ | 36.2 | 2.36 | 99.8% |
| Example 16 | $Mn_{0.597}Fe_{0.398}Co_{0.005}HPO_4 \cdot H_2O$ | 9.2 | 2.40 | 98.3% |
| Example 17 | $Mn_{0.597}Fe_{0.398}Co_{0.005}HPO_4$ | 9.0 | 2.48 | 99.7% |
| Example 18 | $Mn_{0.597}Fe_{0.398}Co_{0.005}HPO_4 \cdot H_2O$ | 10.4 | 2.48 | 99.5% |
| Example 19 | $Mn_{0.597}Fe_{0.398}Co_{0.005}HPO_4 \cdot H_2O$ | 9.1 | 2.44 | 99.0% |
| Example 20 | $Mn_{0.597}Fe_{0.398}Co_{0.005}HPO_4 \cdot H_2O$ | 9.1 | 2.44 | 99.0% |
| Example 21 | $Mn_{0.597}Fe_{0.398}Co_{0.005}HPO_4 \cdot H_2O$ | 9.1 | 2.44 | 99.0% |
| Example 22 | $Mn_{0.597}Fe_{0.398}Co_{0.005}HPO_4 \cdot H_2O$ | 9.1 | 2.44 | 99.0% |
| Example 23 | $Mn_{0.597}Fe_{0.398}Co_{0.005}HPO_4 \cdot H_2O$ | 9.1 | 2.44 | 99.0% |
| Example 24 | $Mn_{0.597}Fe_{0.398}Co_{0.005}HPO_4 \cdot H_2O$ | 9.1 | 2.44 | 99.0% |
| Example 25 | $Mn_{0.597}Fe_{0.398}Co_{0.005}HPO_4 \cdot H_2O$ | 9.1 | 2.44 | 99.0% |
| Example 26 | $Mn_{0.597}Fe_{0.398}Co_{0.005}HPO_4 \cdot H_2O$ | 9.1 | 2.44 | 99.0% |
| Example 27 | $Mn_{0.597}Fe_{0.398}Co_{0.005}HPO_4 \cdot H_2O$ | 9.1 | 2.44 | 99.0% |
| Example 28 | $Mn_{0.597}Fe_{0.398}Co_{0.005}HPO_4 \cdot H_2O$ | 9.1 | 2.44 | 99.0% |
| Example 29 | $Mn_{0.638}Fe_{0.336}Ni_{0.006}HPO_4 \cdot H_2O$ | 9.8 | 2.46 | 99.20% |
| Example 30 | $Mn_{0.513}Fe_{0.479}Eu_{0.008}HPO_4 \cdot H_2O$ | 9.5 | 2.33 | 99.50% |
| Example 31 | $Mn_{0.597}Fe_{0.398}Co_{0.005}HPO_4 \cdot H_2O$ | 4.6 | 1.35 | 99.1% |
| Example 32 | $Mn_{0.597}Fe_{0.398}Co_{0.005}HPO_4 \cdot H_2O$ | 10.0 | 2.20 | 99.5% |
| Example 33 | $Mn_{0.597}Fe_{0.398}Co_{0.005}HPO_4 \cdot H_2O$ | 8.8 | 2.26 | 99.5% |
| Example 34 | $Mn_{0.597}Fe_{0.398}Co_{0.005}HPO_4 \cdot H_2O$ | 7.3 | 2.11 | 99.2% |
| Example 35 | $Mn_{0.597}Fe_{0.398}Co_{0.005}HPO_4 \cdot H_2O$ | 7.1 | 2.22 | 99.0% |
| Example 36 | $Mn_{0.597}Fe_{0.398}Co_{0.005}HPO_4 \cdot H_2O$ | 9.1 | 2.44 | 99.0% |
| Example 37 | $Mn_{0.597}Fe_{0.398}Co_{0.005}HPO_4 \cdot H_2O$ | 9.1 | 2.44 | 99.0% |
| Example 38 | $Mn_{0.597}Fe_{0.398}Co_{0.005}HPO_4 \cdot H_2O$ | 9.1 | 2.44 | 99.0% |
| Example 39 | $Mn_{0.597}Fe_{0.398}Co_{0.005}HPO_4 \cdot H_2O$ | 9.1 | 2.44 | 99.0% |
| Example 40 | $Mn_{0.597}Fe_{0.398}Co_{0.005}HPO_4 \cdot H_2O$ | 9.1 | 2.44 | 99.0% |
| Example 41 | $Mn_{0.597}Fe_{0.398}Co_{0.005}HPO_4 \cdot H_2O$ | 9.1 | 2.44 | 99.0% |
| Example 42 | $Mn_{0.597}Fe_{0.398}Co_{0.005}HPO_4 \cdot H_2O$ | 6.9 | 1.46 | 99.0% |

**Table 4: Performance parameters of positive electrode materials in Examples 1 to 42 and Comparative Example 1**

| No. | Positive electrode material | | | | |
|---|---|---|---|---|---|
| | Chemical formula of core | Coating layer | Compacted density $(g/cm^3)$ | BET $(m^2/g)$ | Powder resistivity $(\Omega \cdot cm)$ |
| Example 1 | $LiMn_{0.597}Fe_{0.398}Co_{0.005}PO_4$ | Carbon | 2.45 | 13.6 | 86 |
| Example 2 | $LiMn_{0.597}Fe_{0.398}Co_{0.005}PO_4$ | Carbon | 2.01 | 17.7 | 587 |
| Example 3 | $LiMn_{0.597}Fe_{0.398}Co_{0.005}PO_4$ | Carbon | 2.36 | 12.0 | 78 |
| Example 4 | $LiMn_{0.597}Fe_{0.398}Co_{0.005}PO_4$ | Carbon | 1.88 | 17.7 | 675 |
| Example 5 | $LiMn_{0.597}Fe_{0.398}Co_{0.005}PO_4$ | Carbon | 2.50 | 12.1 | 58 |
| Example 6 | $LiMn_{0.597}Fe_{0.398}Co_{0.005}PO_4$ | Carbon | 2.40 | 14.5 | 256 |
| Example 7 | $LiMn_{0.597}Fe_{0.398}Co_{0.005}PO_4$ | Carbon | 2.38 | 14.2 | 79 |
| Example 8 | $LiMn_{0.597}Fe_{0.398}Co_{0.005}PO_4$ | Carbon | 2.01 | 15.34 | 129 |
| Example 9 | $LiMn_{0.597}Fe_{0.398}Co_{0.005}PO_4$ | Carbon | 2.46 | 14.45 | 98 |
| Example 10 | $LiMn_{0.597}Fe_{0.398}Co_{0.005}PO_4$ | Carbon | 2.10 | 15.67 | 158 |
| Example 11 | $LiMn_{0.597}Fe_{0.398}Co_{0.005}PO_4$ | Carbon | 2.29 | 14.43 | 102 |
| Example 12 | $LiMn_{0.597}Fe_{0.398}Co_{0.005}PO_4$ | Carbon | 2.31 | 15.65 | 186 |
| Example 13 | $LiMn_{0.597}Fe_{0.398}Co_{0.005}PO_4$ | Carbon | 2.41 | 15.75 | 167 |
| Example 14 | $LiMn_{0.597}Fe_{0.398}Co_{0.005}PO_4$ | Carbon | 2.38 | 13.57 | 97 |
| Example 15 | $LiMn_{0.597}Fe_{0.398}Co_{0.005}PO_4$ | Carbon | 2.38 | 13.89 | 93 |
| Example 16 | $LiMn_{0.597}Fe_{0.398}Co_{0.005}PO_4$ | Carbon | 2.40 | 14.32 | 110 |
| Example 17 | $LiMn_{0.597}Fe_{0.398}Co_{0.005}PO_4$ | Carbon | 2.48 | 12.98 | 32 |
| Example 18 | $LiMn_{0.597}Fe_{0.398}Co_{0.005}PO_4$ | Carbon | 2.47 | 17.32 | 45 |
| Example 19 | $LiMn_{0.597}Fe_{0.398}Co_{0.005}PO_4$ | Carbon | 2.45 | 15.43 | 178 |
| Example 20 | $LiMn_{0.597}Fe_{0.398}Co_{0.005}PO_4$ | Carbon | 2.44 | 14.32 | 98 |
| Example 21 | $LiMn_{0.597}Fe_{0.398}Co_{0.005}PO_4$ | Carbon | 2.30 | 12.12 | 864 |
| Example 22 | $LiMn_{0.597}Fe_{0.398}Co_{0.005}PO_4$ | Carbon | 2.32 | 12.43 | 798 |
| Example 23 | $LiMn_{0.597}Fe_{0.398}Co_{0.005}PO_4$ | Carbon | 2.48 | 13.43 | 457 |
| Example 24 | $LiMn_{0.597}Fe_{0.398}Co_{0.005}PO_4$ | Carbon | 2.15 | 18.00 | 23 |
| Example 25 | $LiMn_{0.597}Fe_{0.398}Co_{0.005}PO_4$ | Carbon | 2.45 | 13.45 | 89 |
| Example 26 | $LiMn_{0.597}Fe_{0.398}Co_{0.005}PO_4$ | Carbon | 2.48 | 12.65 | 155 |
| Example 27 | $LiMn_{0.597}Fe_{0.398}Co_{0.005}PO_4$ | Carbon | 2.34 | 15.54 | 189 |
| Example 28 | $LiMn_{0.597}Fe_{0.398}Co_{0.005}PO_4$ | Carbon | 2.38 | 15.78 | 80 |
| Example 29 | $LiMn_{0.658}Fe_{0.336}Ni_{0.006}PO_4$ | Carbon | 2.37 | 15.01 | 589 |
| Example 30 | $LiMn_{0.513}Fe_{0.479}Eu_{0.008}PO_4$ | Carbon | 2.32 | 14.95 | 35 |
| Example 31 | $LiMn_{0.597}Fe_{0.398}Co_{0.005}PO_4$ | Carbon | 1.88 | 14.56 | 436 |
| Example 32 | $LiMn_{0.597}Fe_{0.398}Co_{0.005}PO_4$ | Carbon | 2.21 | 14.88 | 324 |
| Example 33 | $LiMn_{0.597}Fe_{0.398}Co_{0.005}PO_4$ | Carbon | 2.37 | 15.32 | 243 |
| Example 34 | $LiMn_{0.597}Fe_{0.398}Co_{0.005}PO_4$ | Carbon | 2.06 | 13.43 | 234 |
| Example 35 | $LiMn_{0.597}Fe_{0.398}Co_{0.005}PO_4$ | Carbon | 2.21 | 14.43 | 154 |
| Example 36 | $LiMn_{0.597}Fe_{0.398}Co_{0.005}PO_4$ | Carbon | 2.23 | 13.23 | 675 |

(continued)

| No. | Positive electrode material | | | | |
|---|---|---|---|---|---|
| | Chemical formula of core | Coating layer | Compacted density (g/cm³) | BET (m²/g) | Powder resistivity (Ω·cm) |
| Example 37 | $LiMn_{0.597}Fe_{0.398}Co_{0.005}PO_4$ | Carbon | 2.51 | 11.21 | 121 |
| Example 38 | $LiMn_{0.597}Fe_{0.398}Co_{0.005}PO_4$ | Carbon | 2.39 | 13.56 | 1893 |
| Example 39 | $LiMn_{0.597}Fe_{0.398}Co_{0.005}PO_4$ | Carbon | 2.11 | 22.34 | 12 |
| Example 40 | $LiMn_{0.597}Fe_{0.398}Co_{0.005}PO_4$ | Carbon | 2.28 | 13.43 | 145 |
| Example 41 | $LiMn_{0.597}Fe_{0.398}Co_{0.005}PO_4$ | Carbon | 2.52 | 9.87 | 23 |
| Example 42 | $LiMn_{0.597}Fe_{0.398}Co_{0.005}PO_4$ | Carbon | 1.67 | 23.45 | 435 |
| Comparative Example 1 | $LiMn_{0.597}Fe_{0.398}Co_{0.005}PO_4$ | Carbon | 2.01 | 13.45 | 2342 |

Material test and battery test

(1) Test of mass percentages of elements in precursor and positive electrode material and chemical formula of compound:

0.2 g of a precursor material or a positive electrode material was weighed and added into a 100 mL beaker, 10 mL of a 10%w/w nitric acid solution was added, followed by heating at 120°C for digestion for 0.5 hours, and diluting to a fixed volume using a 100 mL volumetric flask. Then, 1 mL of the solution was pipetted into a 100 mL volumetric flask using a pipette and diluted to a fixed volume to obtain a solution under test.

Mass percentages of lithium, manganese, iron, phosphorus, and doping elements in the solution under test were tested using an inductively coupled plasma optical emission spectrometer (ICP-OES, instrument brand: Agilent 5800), and molar ratios of the elements in the precursor material or the positive electrode material were calculated based on the mass percentages of the elements to determine the chemical formula of the compound.

Based on the tested mass percentage of the phosphorus element in the precursor material and in combination with the above chemical formula, a mass percentage of the compound in the precursor material was calculated.

(2) Test of particle size $D_v50$:

An appropriate amount of a sample was taken, 20 mL of deionized water was added, ultrasonic treatment was performed for 5 minutes (at 53 kHz and 120 W) to fully disperse the sample, and a particle size $D_v50$ of the material was tested using a laser particle size analyzer (MasterSizer 2000).

(3) Micro morphology and micro-region element distribution evaluation:

The micro morphology of the precursor material and the positive electrode material in Example 1 was observed using a scanning electron microscope (SEM, instrument brand: ZEISS sigma 300).

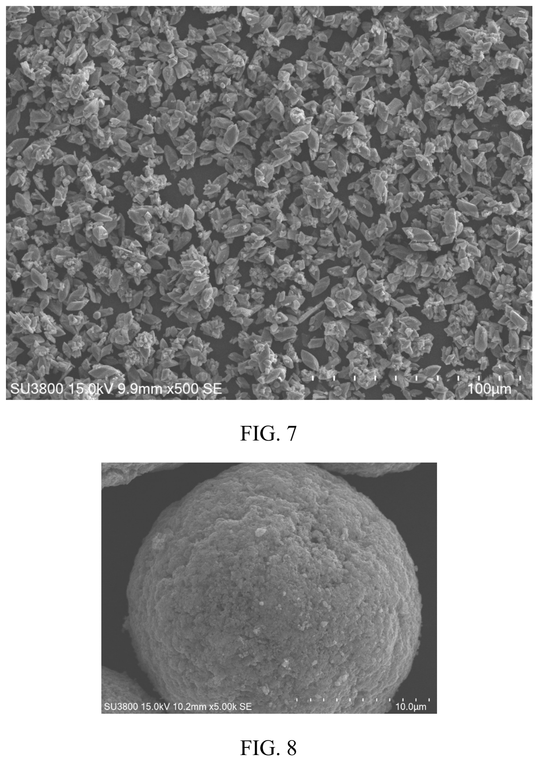

As shown in FIG. 7, the precursor material included primary crystalline particles with polyhedral morphology, with flat and regular crystal planes and few amorphous, honeycomb, or dendritic crystals, indicating that the precursor material had high crystallinity.

As shown in FIG. 8, the carbon coating layer of the positive electrode material had good coating density and was not prone to micropores.

The distribution of manganese, iron, phosphorus, and a doping element cobalt in a micro region of the positive electrode material obtained in Example 1 was characterized using an X-ray energy dispersive spectrometer (EDS).

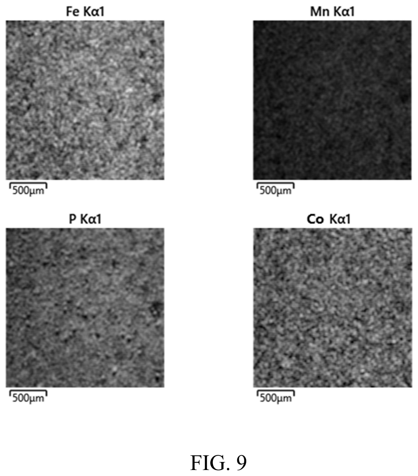

As shown in FIG. 9, the elements in the positive electrode material were relatively uniformly distributed.

(4) Test of compacted density:

0.6000 g of a sample was weighed and placed in a mold of a compacted density tester, the tester automatically applied a pressure of 30 MPa to compact the powder, and the volume of the powder was calculated based on a cross-sectional area of the mold and a thickness of the powder at that point. The compacted density of the powder material was calculated as the compacted density being equal to mass/volume.

(5) Test of BET specific surface area:

1 g of a sample was placed in a specific surface area test tube, the specific surface area test tube was then placed into a specific surface area analyzer, a liquid nitrogen cup was filled with liquid nitrogen and fitted around the specific surface area test tube, and then the BET specific surface area was tested while the sample was maintained at a temperature of -200°C.

(6) Test of powder resistivity and electronic conductivity:

1 g of a sample was placed in a mold, then the mold was placed into a four-probe resistivity tester, the pressure was adjusted to 7.85 MPa, and after the mold height and the pressure were both stable, a forward resistivity and a reverse resistivity of the sample were respectively tested, with an average of the two taken as the powder resistivity of the sample.
The electronic conductivity was inversely proportional to the powder resistivity.

(7) Test of discharge specific capacity of battery:

A Shenzhen Neware battery testing system was used, and a button battery undergone charge and discharge cycles at a charge-discharge rate of 0.1C, where 50 cycles were performed, a test temperature was 25.0°C, and a charge-discharge voltage was 2.0 V-4.3 V. A discharge capacity of the last cycle was divided by the mass of the positive electrode material to obtain a discharge specific capacity at the charge-discharge rate of 0.1C.

(8) Test of cycling capacity retention rate of battery:

A Shenzhen Neware battery testing system was used, and a button battery undergone charge and discharge cycles at a charge-discharge rate of 1.0C, where 100 cycles were performed, a test temperature was 25.0°C, and a charge-discharge voltage was 2.0 V-4.3 V. A percentage of a discharge capacity at the 100th cycle relative to a discharge capacity at the first cycle was a cycling capacity retention rate.
The above results were shown in Tables 3 to 5.

**Table 5: Electrical performance test results in Examples 1 to 42 and Comparative Example 1**

| No. | Specific capacity of battery (at 0.1C) | Cycling capacity retention rate (after 100 cycles at 1.0C) |
| --- | --- | --- |
| Example 1 | 154.2 mAh/g | 98.95% |
| Example 2 | 152.1 mAh/g | 98.23% |
| Example 3 | 148.9 mAh/g | 98.93% |
| Example 4 | 153.6 mAh/g | 98.79% |
| Example 5 | 151.3 mAh/g | 98.64% |
| Example 6 | 149.95 mAh/g | 97.45% |
| Example 7 | 154.1 mAh/g | 98.98% |
| Example 8 | 151.2 mAh/g | 98.23% |
| Example 9 | 150.4 mAh/g | 98.33% |
| Example 10 | 152.3 mAh/g | 98.67% |
| Example 11 | 152.7 mAh/g | 98.55% |
| Example 12 | 151.2 mAh/g | 98.35% |
| Example 13 | 151.9 mAh/g | 98.45% |
| Example 14 | 151.9 mAh/g | 98.87% |
| Example 15 | 152.9 mAh/g | 98.91 % |
| Example 16 | 153.2 mAh/g | 98.96% |
| Example 17 | 151.4 mAh/g | 97.76% |
| Example 18 | 150.9 mAh/g | 97.32% |

(continued)

| No. | Specific capacity of battery (at 0.1C) | Cycling capacity retention rate (after 100 cycles at 1.0C) |
|---|---|---|
| Example 19 | 151.43 mAh/g | 98.54% |
| Example 20 | 154.3 mAh/g | 97.32% |
| Example 21 | 145.3 mAh/g | 96.43% |
| Example 22 | 144.6 mAh/g | 96.34% |
| Example 23 | 148.0 mAh/g | 98.54% |
| Example 24 | 144.3 mAh/g | 99.92% |
| Example 25 | 154.9 mAh/g | 98.67% |
| Example 26 | 150.2 mAh/g | 98.88% |
| Example 27 | 145.3 mAh/g | 98.43% |
| Example 28 | 150.67 mAh/g | 98.54% |
| Example 29 | 145.87 mAh/g | 97.43% |
| Example 30 | 155.32 mAh/g | 98.43% |
| Example 31 | 150.4 mAh/g | 98.56% |
| Example 32 | 149.3 mAh/g | 98.86% |
| Example 33 | 150.1 mAh/g | 97.74% |
| Example 34 | 148.3 mAh/g | 98.43% |
| Example 35 | 149.43 mAh/g | 97.97% |
| Example 36 | 141.3 mAh/g | 97.87% |
| Example 37 | 139.3 mAh/g | 95.87% |
| Example 38 | 141.5 mAh/g | 97.43% |
| Example 39 | 130.4 mAh/g | 99.65% |
| Example 40 | 144.4 mAh/g | 98.76% |
| Example 41 | 139.4 mAh/g | 99.43% |
| Example 42 | 135.77 mAh/g | 98.13% |
| Comparative Example 1 | 132.18 mAh/g | 98.41% |

From the above results, it can be seen that:

As compared with Comparative Example 1 where no precursor material is used for preparing the positive electrode material, the batteries in Examples 1 to 38 and 40 to 42 of this application have significantly higher specific capacities.

As compared with Example 31 where a precursor material with a low compacted density is used, the batteries in Examples 1, 4, and 5 of this application have significantly higher specific capacities and cycling capacity retention rates.

As compared with Example 32 where high addition and reaction temperatures are used during preparation of the precursor material, the batteries in Examples 1, 8, and 9 of this application have higher specific capacities.

As compared with Example 33 where a low molar ratio of the phosphoric acid to the total metal elements is used during preparation of the precursor material, the batteries in Examples 1, 12, and 13 of this application have higher specific capacities and cycling capacity retention rates.

As compared with Example 34 where a low aging temperature and long aging time are used during preparation of the precursor material, the batteries in Examples 1, 14, and 15 of this application have higher specific capacities and cycling capacity retention rates. As compared with Example 35 where a high aging temperature and a short aging time are used during preparation of the precursor material, the batteries in Examples 1, 14, and 15 of this application have higher specific capacities and cycling capacity retention rates.

As compared with Example 36 where a low sintering temperature is used during preparation of the pre-product, the batteries in Examples 1, 21, and 22 of this application have higher specific capacities. As compared with Example 37 where a high sintering temperature is used during preparation of the pre-product, the batteries in Examples 1, 21, and 22 of this application have higher specific capacities and cycling capacity retention rates.

As compared with Example 38 where a low weight ratio of the pre-product to the carbon source is used during preparation of the positive electrode material, the batteries in Examples 1, 23, and 24 of this application have higher specific capacities and cycling capacity retention rates. As compared with Example 39 where a high weight ratio of the pre-product to the carbon source is used during preparation of the positive electrode material, the batteries in Examples 1, 23, and 24 of this application have higher specific capacities.

As compared with Example 40 where a low sintering temperature is used during preparation of the positive electrode material, and Example 41 where a high sintering temperature is used during preparation of the positive electrode material, the batteries in Examples 1, 26, and 27 of this application have higher specific capacities.

As compared with Example 42 where a metal salt solution is added at once and aging is not performed during preparation of the precursor material, the batteries in Examples 1, 5, 10, 11, 14, and 15 of this application have significantly higher specific capacities and cycling capacity retention rates.

It should be noted that this application is not limited to the above embodiments. The above embodiments are merely illustrative, and embodiments having substantially the same configuration and achieving the same effects as the technical idea within the scope of the technical solution of this application are included in the technical scope of this application. Additionally, without departing from the gist of this application, various modifications that can be conceived by persons skilled in the art and other configurations formed by combining some of the constituent elements of the embodiments are also included in the scope of this application.

**Claims**

1. A method for preparing a positive electrode material, comprising the following steps:

   mixing a precursor material, a lithium source, and an optional phosphorus source, and sintering to obtain a pre-product, wherein the precursor material comprises a compound $Mn_xFe_yM_{(1-x-y)}HPO_4 \cdot nH_2O$, $0.9 \leq x+y < 1$, $0 < x \leq 0.9$, $0 < y \leq 0.9$, $0 \leq n \leq 6$, and M comprises one or more of transition metal elements other than manganese and iron, Group IIA metal elements, Group IIIA metal elements, and Group IVA metal elements; and
   mixing the pre-product, a carbon source, and a solvent, drying, and sintering to obtain a positive electrode material.

2. The method according to claim 1, wherein the positive electrode material comprises a core and a coating layer coating the core; the core comprises a compound $LiMn_xFe_yM_{(1-x-y)}PO_4$, wherein $0.9 \leq x+y < 1$, $0 < x \leq 0.9$, $0 < y \leq 0.9$, and M comprises one or more of transition metal elements other than manganese and iron, Group IIA metal elements, Group IIIA metal elements, and Group IVA metal elements; and the coating layer comprises carbon.

3. The method according to claim 1 or 2, wherein

$$0.992 \leq x+y < 0.995;$$

   and/or

$$0.513 \leq x \leq 0.658;$$

   and/or

$$0.336 \leq y \leq 0.479;$$

   and/or

$$0 \leq n \leq 1;$$

   and/or
   M comprises one or more elements of titanium, magnesium, aluminum, vanadium, zinc, cobalt, nickel, tin, niobium, tungsten, zirconium, tantalum, cerium, and europium.

4. The method according to any one of claims 1 to 3, wherein

a particle size $D_v50$ of the precursor material is 3-100 $\mu$m, optionally 5-50 $\mu$m, and more optionally 8-20 $\mu$m; and/or

a compacted density of the precursor material at 30 MPa is 1.35-2.5 $g/cm^3$, optionally 1.5-2.5 $g/cm^3$; and/or

a mass percentage of the compound $Mn_xFe_yM_{(1-x-y)}HPO_4 \cdot nH_2O$ in the precursor material is 98%-100%; and/or

the precursor material comprises primary crystalline particles with polyhedral morphology.

5. The method according to any one of claims 1 to 4, wherein the precursor material is prepared by the following steps:

dissolving a soluble manganese source, a soluble iron source, and a soluble source of element M in a solvent to obtain a solution;

slowly adding the solution to a phosphoric acid solution for reaction, followed by optional aging, to obtain a reaction product; and

filtering the reaction product and drying the resulting filter residue to obtain the precursor material.

6. The method according to claim 5, wherein in the steps of preparing the precursor material,

the soluble manganese source comprises one or more of a soluble organic manganese source and a soluble inorganic manganese source, optionally a soluble organic manganese source, more optionally one or more of soluble organic acid salts of manganese, and further optionally one or more of manganous acetate, manganous formate, manganous citrate, and manganous 2-hydroxypropionate; and/or

the soluble iron source comprises one or more of a soluble organic iron source and a soluble inorganic iron source, optionally a soluble organic iron source, more optionally one or more of soluble organic acid salts of iron, and further optionally one or more of ferrous acetate, ferrous formate, ferrous citrate, and ferrous 2-hydroxypropionate; and/or

the soluble source of element M comprises one or more of an inorganic source of element M and an organic source of element M, optionally one or more of soluble organic acid salts and soluble inorganic acid salts of element M, and more optionally one or more of sulfates, nitrates, chlorides, formates, acetates, citrates, and 2-hydroxypropionates of element M.

7. The method according to claim 5 or 6, wherein in the steps of preparing the precursor material, the solution is slowly added to the phosphoric acid solution for reaction at 25°C-95°C, and optionally, the solution is slowly added to the phosphoric acid solution for reaction at 30°C-90°C; and/or

an addition time of the solution is 10-300 min, optionally 15-300 min, and more optionally 60-180 min; and/or

a molar ratio of a phosphoric acid in the phosphoric acid solution to the total metal elements in the solution is 0.4-1.5, optionally 0.5-1.5, and more optionally 0.8-1.2; and/or

a total concentration of the metal elements in the solution is 0.1-3.0 mol/L, optionally 0.5-2.5 mol/L, and more optionally 1.0-1.6 mol/L; and/or

a concentration of the phosphoric acid in the phosphoric acid solution is 0.1-3.0 mol/L, optionally 0.5-2.5 mol/L, and more optionally 1.0-1.32 mol/L; and/or

a molar amount of element M in the solution accounts for 0.1%-10% of a total molar amount of the metal elements; and/or

a molar amount of the Mn element in the solution accounts for 30%-85% of the total molar amount of the metal elements.

8. The method according to any one of claims 5 to 7, wherein in the steps of preparing the precursor material,

an aging temperature is 40°C-98°C, optionally 60°C-95°C; and/or

an aging time is 10-500 min, optionally 30-300 min; and/or

the reaction and/or aging is performed under a condition with a pH value of 1.5-4.5; and/or

the reaction and/or aging is performed under a stirring condition.

9. The method according to any one of claims 5 to 8, wherein in the steps of preparing the precursor material,

the dissolution is performed at 25°C-80°C, optionally at 25°C-40°C; and/or
the solvent is water; and/or
the filtration is vacuum filtration, pressure filtration, or centrifugal filtration; and/or
before the drying, the filter residue is washed, and optionally, the filter residue is washed with water; and/or
a drying temperature is 80°C-500°C, optionally 120°C-400°C, and more optionally 150°C-300°C; and/or
a drying time is 10-300 min.

10. The method according to any one of claims 1 to 9, wherein in the steps of preparing the pre-product,

a molar ratio of the precursor material to the lithium element in the lithium source is 0.9:1-1.1:1; and/or
a molar ratio of the phosphorus element in the phosphorus source to the lithium element in the lithium source is 1:1-1.05:1; and/or
a mixing time is 0.5-4 h; and/or
a sintering temperature is 350°C-900°C, optionally 450°C-800°C; and/or
a sintering time is 3-10 h.

11. The method according to any one of claims 1 to 10, wherein in the steps of preparing the positive electrode material,

a weight ratio of the pre-product to the carbon source is 3:1-30:1, optionally 5:1-15:1; and/or
a ratio of a weight of the solvent to a total weight of the carbon source and the pre-product is 1:1-10:1; and/or
a mixing time is 2-8 h; and/or
the drying is performed by spray drying; and/or
an inlet temperature of the spray drying is 100°C-280°C; and/or
an outlet temperature of the spray drying is 50°C-180°C; and/or
a sintering temperature is 500°C-900°C, optionally 600°C-800°C; and/or
a sintering time is 8-20 h.

12. The method according to any one of claims 1 to 11, wherein

the lithium source comprises one or more of organic acid salts, inorganic acid salts, oxides, and hydroxides of lithium, optionally one or more of lithium carbonate, lithium hydroxide, lithium acetate, and lithium oxide; and/or
the phosphorus source comprises one or more of phosphates, hydrogen phosphates, and dihydrogen phosphates, optionally one or more of lithium phosphate, lithium dihydrogen phosphate, dilithium hydrogen phosphate, manganese hydrogen phosphate, ammonium dihydrogen phosphate, diammonium hydrogen phosphate, and manganese iron hydrogen phosphate; and/or
the carbon source comprises one or more of an organic carbon source and an inorganic carbon source, optionally one or more of methanol, ethanol, acetic acid, polyethylene glycol, polyvinyl alcohol, polyvinyl butyral, glucose, maltose, and polytetrafluoroethylene; and/or
the solvent comprises one or more of water, ethanol, and acetone.

13. A positive electrode material, comprising a core and a coating layer coating the core, wherein the core comprises a compound $LiMn_xFe_yM_{(1-x-y)}PO_4$, $0.9 \leq x+y<1$, $0<x \leq 0.9$, $0<y \leq 0.9$, and M comprises one or more of transition metal elements other than manganese and iron, Group IIA metal elements, Group IIIA metal elements, and Group IVA metal elements, optionally one or more elements of titanium, magnesium, aluminum, vanadium, zinc, cobalt, nickel, tin, niobium, tungsten, zirconium, tantalum, cerium, and europium; and the coating layer comprises carbon.

14. The positive electrode material according to claim 13, wherein

a compacted density of the positive electrode material at 30 MPa is 1.88-2.52 $g/cm^3$, optionally 2.0-2.5 $g/cm^3$; and/or
a BET specific surface area of the positive electrode material at a liquid nitrogen temperature is 9.87-22.34 $m^2/g$, optionally 12-18 $m^2/g$; and/or
a powder resistivity of the positive electrode material is 1-1893 $\Omega \cdot cm$, optionally 12-1000 $\Omega \cdot cm$; and/or
the positive electrode material is prepared by the method according to any one of claims 1 to 12.

15. A positive electrode plate, comprising a positive electrode material prepared by the method according to any one of claims 1 to 12 or the positive electrode material according to claim 13 or 14.

16. A battery, comprising the positive electrode plate according to claim 15.

17. An electric apparatus, comprising the battery according to claim 16.

5

FIG. 1

5

FIG. 2

4

FIG. 3

1

FIG. 4

1

2

4 4 4

4

4

4

3

FIG. 5

FIG. 6

FIG. 7

FIG. 8

FIG. 9

## INTERNATIONAL SEARCH REPORT

| International application No. |
|---|
| **PCT/CN2024/096471** |

### A. CLASSIFICATION OF SUBJECT MATTER

H01M4/36(2006.01)i

According to International Patent Classification (IPC) or to both national classification and IPC

### B. FIELDS SEARCHED

Minimum documentation searched (classification system followed by classification symbols)

IPC: H01M4

Documentation searched other than minimum documentation to the extent that such documents are included in the fields searched

Electronic data base consulted during the international search (name of data base and, where practicable, search terms used)

CNTXT, ENTXTC, DWPI, CNKI, ISI_Web of Science, CAPLUS(STN): 钒, 磷酸, 磷酸锰铁, 磷酸氢, HPO4, 前驱体, 铁, 锰, 铝, 镁, 镍, 钨, 锡, 锌, 钛, 钴, 钽, 铈, 铌, 铕, 锆, 烧结, 锰源, 铁源, 磷源, AL, Ce, CO, Eu, Fe, MG, Mn, Nb, NI, SN, Ta, Ti, ZN, ZR, "V", Mn?Fe????HPO4, "W", Mn?Fe?+HPO4, Mn?Fe?8wHPO4, Mn?Fe5wHPO4, Mn?Fe?+HPO, precursor, iron, ferric, manganese, phosphorus source, sinter+

### C. DOCUMENTS CONSIDERED TO BE RELEVANT

| Category* | Citation of document, with indication, where appropriate, of the relevant passages | Relevant to claim No. |
|---|---|---|
| X | CN 117038882 A (NINGBO RONBAY NEW ENERGY TECHNOLOGY CO., LTD.) 10 November 2023 (2023-11-10) description, paragraphs 34-64, embodiment 13, and table 1 | 1-17 |
| A | CN 116130647 A (GUIZHOU YAYOU NEW MATERIAL CO., LTD.) 16 May 2023 (2023-05-16) description, paragraphs 5-38, and embodiments 1-3, and figure 1 | 1-17 |
| A | CN 115072695 A (JIANGSU XIEXIN LITHIUM TECHNOLOGY CO., LTD.) 20 September 2022 (2022-09-20) description, paragraphs 6-39, and embodiments 1-5 | 1-17 |
| A | CN 115535992 A (SHENZHEN ZHONGXINNENG TECHNOLOGY CO., LTD.) 30 December 2022 (2022-12-30) entire document | 1-17 |
| A | CN 104752715 A (BYD CO., LTD.) 01 July 2015 (2015-07-01) entire document | 1-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2024** | **05 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/096471** |

**C.    DOCUMENTS CONSIDERED TO BE RELEVANT**

| Category* | Citation of document, with indication, where appropriate, of the relevant passages | Relevant to claim No. |
|---|---|---|
| A | CN 115810742 A (CONTEMPORARY AMPEREX TECHNOLOGY CO., LTD.) 17 March 2023 (2023-03-17)<br>        entire document | 1-17 |
| A | WO 2010126185 A1 (DAEJUNG EM CO., LTD.) 04 November 2010 (2010-11-04)<br>        entire document | 1-17 |

Form PCT/ISA/210 (second sheet) (July 2022)

**INTERNATIONAL SEARCH REPORT**
Information on patent family members

International application No.

**PCT/CN2024/096471**

| Patent document cited in search report | | | Publication date (day/month/year) | Patent family member(s) | | | Publication date (day/month/year) |
|---|---|---|---|---|---|---|---|
| CN | 117038882 | A | 10 November 2023 | None | | | |
| CN | 116130647 | A | 16 May 2023 | None | | | |
| CN | 115072695 | A | 20 September 2022 | None | | | |
| CN | 115535992 | A | 30 December 2022 | CN | 115535992 | B | 28 March 2023 |
| CN | 104752715 | A | 01 July 2015 | None | | | |
| CN | 115810742 | A | 17 March 2023 | None | | | |
| WO | 2010126185 | A1 | 04 November 2010 | WO | 2010126185 | A9 | 16 December 2010 |
| | | | | KR | 20100117895 | A | 04 November 2010 |

Form PCT/ISA/210 (patent family annex) (July 2022)

**REFERENCES CITED IN THE DESCRIPTION**

**Patent documents cited in the description**

- CN 202311638192